(19) **Europäisches Patentamt**
**European Patent Office**
**Office européen des brevets**

(11) **EP 2 975 437 B1**

(12) **EUROPEAN PATENT SPECIFICATION**

(45) Date of publication and mention
of the grant of the patent:
**17.06.2020 Bulletin 2020/25**

(51) Int Cl.:
*G01V 99/00* *(2009.01)*

(21) Application number: **15175712.7**

(22) Date of filing: **07.07.2015**

(54) **METHOD AND SYSTEM TO INVERT FOR FAULT ACTIVITY AND TECTONIC STRESS**

VERFAHREN UND VORRICHTUNG FÜR DIE INVERSION VON VERWERFUNGSAKTIVITÄT UND TEKTONISCHE BELASTUNG

METHODE ET SYSTÈME POUR INVERSER L'ACTIVITE D'UNE FAILLE ET LA CONTRAINTE TECTONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2014 FR 1456780**

(43) Date of publication of application:
**20.01.2016 Bulletin 2016/03**

(73) Proprietors:
• **Services Pétroliers Schlumberger**
**75007 Paris (FR)**
Designated Contracting States:
**FR**
• **Logined B.V.**
**2586 BJ S Gravenhage (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Maerten, Frantz**
**34570 Pignan (FR)**
• **Maerten, Laurent**
**34830 Clapiers (FR)**
• **Lejri, Mustapha**
**34090 Montpellier (FR)**
• **Joonnekindt, Jean Pierre**
**34000 Montpellier (FR)**

(74) Representative: **Schlumberger Intellectual Property Department**
**Parkstraat 83**
**2514 JG Den Haag (NL)**

(56) References cited:
**WO-A2-2012/045936 US-A1- 2012 072 188**

**Description**

BACKGROUND

A fault may be considered a finite complex three-dimensional surface discontinuity in a volume of earth or rock. Fractures, including, without limitation, joints, veins, dikes, pressure solution seams with stylolites, and so forth, may be propagated intentionally, to increase permeability in formations such as shale, in which optimizing the number, placement, and size of fractures in the formation increases the yield of resources like shale gas.

Stress, in continuum mechanics, may be considered a measure of the internal forces acting within a volume. Such stress may be defined as a measure of the average force per unit area at a surface within the volume on which internal forces act. The internal forces may be produced between the particles in the volume as a reaction to external forces applied to the volume.

Understanding the origin and evolution of faults and the tectonic history of faulted regions can be accomplished by relating fault orientation, slip direction, geologic and geodetic data to the state of stress in the earth's crust. In certain inverse problems, the directions of the remote principal stresses and a ratio of their magnitudes are constrained by analyzing field data on fault orientations and slip directions as inferred from artifacts such as striations on exposed fault surfaces. Also, even if many faults surfaces can be interpreted from seismic, it is well known that, for a given geological time, some of them were active (*i.e.,* were not sealed) and therefore have slipped. Since sliding faults greatly perturbed the stress, and consequently generate associated fracturation, it is important to determine, for a given geological time (past or present), which faults were active and which were sealed (*i.e.,* inactive).

In US2012072188, stress and fracture modeling using the principal of superposition is provided. A system simulates linearly independent far field stress models for a subsurface earth volume, computing stress, strain, and displacement values based on superposition of independent stress tensors. Based on the precomputed values, the system generates real-time recovery of paleostress values, or, stress, strain, and displacement parameters for any point in the subsurface volume as the user varies far field stress values. The system recovers one or more tectonic events, or a stress tensor represented by a ratio of principal magnitudes and associated orientation, using fault geometry, well bore data (fracture orientation and secondary fault plane data), GPS, InSAR, folded and faulted horizons, tiltmeters, slip and slikenlines on faults.; The system uses different geologic data from seismic interpretation, well bore readings, and field observation to provide numerous results, such as predicted fracture propagation based on perturbed stress field.

SUMMARY

The invention provides a method for predicting fault activity of a subsurface volume according to claim 1.

The invention further provides a system for predicting fault activity of a subsurface volume according to claim 8. The invention further provides a non-transitory computer readable medium according to claim 15 and storing instructions for predicting fault activity of a subsurface volume.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF DRAWINGS

Embodiments of inverting for fault activity and tectonic stress are described with reference to the following figures. The same numbers are used throughout the figures to reference like features and components.

FIG. 1 is a diagram of an example stress, fracture, and fault activity modeling system.

FIG. 2 is a block diagram of an example computing environment for performing stress, fracture, and fault activity modeling using the principle of superposition.

FIG. 3 is a block diagram of an example stress, fracture, and fault activity modeling engine.

FIG. 4 is a block diagram of stress, fracture, and fault activity modeling techniques.

FIG. 5 is a diagram of an example method applied to fracture and conjugate fault planes using data sets without magnitude information.

FIG. 6 is a flow diagram of an example method of stress, fracture, and fault activity modeling using the principle of superposition.

FIG. 7 is a flow diagram of an example method of stress, fracture, and fault activity modeling using the principle of superposition and a cost function.

FIG. 8, FIG. 9, and FIG. 10 shows an example of stress, fracture, and fault activity modeling.

FIG. 11 shows a computing system in accordance with one or more embodiments of the technology.

DETAILED DESCRIPTION

In the following detailed description of embodiments, numerous specific details are set forth in order to provide a more thorough understanding. However, it will be apparent to one of ordinary skill in the art that embodiments may be practiced without these specific details. In other instances, well-known features have not been described in detail to avoid unnecessarily complicating the description.

Embodiments of inverting for fault activity and tectonic stress provide a system and method to invert for fault activity through geological time, *i.e.,* to detect the faults that were active for a given geological time period. Because a fault could have been active from its generation up to a given geological time before becoming inactive (*e.g.*, locked by cementation), interpreted fault surfaces do not necessarily correspond to present day or historical active faults. In one or more embodiments, the fault activity and the stress regime *(i.e.,* stress ratio and orientation of the principal maximum horizontal stress) are inverted together.

At the end of the inversion process, a far field stress (also referred to as regional stress or tectonic stress throughout this disclosure depending on the context) and the activity of the faults at any particular geological time are determined. For example, the activity of each fault at a particular geological time may be represented by a Boolean variable having a value of 0 or 1, where 0 represents an inactive fault and 1 represents an active fault. Accordingly, the activities of multiple faults at the particular geological time may be represented by corresponding Boolean variables in a vector format referred to as a fault activity Boolean vector. In one or more embodiments, linearly independent far field stress models are simulated for a subsurface earth volume to compute (or calculate) stress, strain, and/or displacement values based on superposition of independent stress tensors. In one or more embodiments, the stress, strain, and/or displacement values are expressed as a sum of contributions from independent stress tensors and individual faults in a Monte Carlo method. Specifically, contributions from independent stress tensors and individual faults are scaled/qualified by random coefficient values assigned in the Monte Carlo method to minimize a cost function. Results of such computation include tectonic events and fault activity, as well as a stress tensor (represented by a ratio of principal magnitudes and associated orientation) and fault activity. The input of the computation may include fault geometry, well bore data (including fracture orientation and secondary fault plane data), global positioning system (GPS), interferometric synthetic aperture radar (InSAR), folded and faulted horizons, tiltmeters, slip and slikenlines on faults, etc. Further, the computation may use different types of geologic data from seismic interpretation, well bore readings, and field observation to provide numerous results, such as predicted fracture propagation based on perturbed stress field.

Definitions

In the description below, certain variables are used in order to simplify the presentation. Table 1 below shows each variable that may be used and the variables' corresponding definition in accordance with one or more embodiments.

**Table 1**

| Variable | Definition |
|---|---|
| $\sigma_R$ | The regional far field stress tensor |
| $\sigma_H$ | The maximum horizontal principal stress (extracted from $\sigma_R$) |
| $\sigma_h$ | The minimum horizontal principal stress (extracted from $\sigma_R$) |
| $\sigma_v$ | The vertical principal stress (extracted from $\sigma_R$) |
| R | The stress ratio defined as $(\sigma_2 - \sigma_3)/(\sigma_1 - \sigma_3)$ and $\in [0,1]$ |
| R' | Another stress ratio $\in [0,3]$, defined $R' = R$ for normal fault regime, $R' = 2 - R$ for strike-slip fault regime, and $R' = 2 + R$ for reverse fault regime. |
| $\mathbf{R}_{\theta,\varphi,\Psi}$ | A rotation matrix defined by the three Euler angles |

(continued)

| Variable | Definition |
|---|---|
| $n$ | The number of triangular elements making the fault surfaces |
| $p$ | The number of observation points or data points |
| $\vec{b}$ | The slip vector on a triangular element of a fault surface |
| $\theta$ | The orientation of the regional far field stress. In one or more embodiments the orientation is according to the north and oriented clockwise |
| $\sigma_1$ | The maximum principal stress value of a stress tensor |
| $\sigma_2$ | The intermediate principal stress value of a stress tensor |
| $\sigma_3$ | The minimum principal stress value of a stress tensor |
| $R_\theta$ | A rotation matrix along the z-axis of an angle $\theta$ (see above) |
| $k$ | A scaling parameter defined as $\sigma_2/\sigma_1$ |
| $\sigma_{ij}$ | The component ($i,j$) of a stress tensor |
| $\alpha_i$ | Optimization parameters used for the principal of superposition |
| $\epsilon_P$ | The strain tensor computed at point $P$ |
| $\sigma_P$ | The stress tensor computed at point $P$ |
| $u_P$ | The displacement field computed at point $P$ |
| $b_e$ | The slip vector computed at the triangular element $e$ |
| $A$ | A 3x3 matrix relating $\alpha$ and $\sigma_R$ |
| $\vec{n_p}$ | A normal to a plane at point P |
| $u_P^c$ | The displacement field computed at point $P$, where superscript $c$ indicates "computed" |
| $u_P^m$ | The displacement field computed at point $P$, where superscript $m$ indicates "measured" |
| $\beta_j$ | The fault activity of a fault $j$. $\beta_j$ is a fault activity Boolean variable having the value 0 for an inactive fault and 1 for an active fault. The fault activity of multiple faults $\beta_1$ through $\beta_n$ for fault 1 through fault n in a subsurface earth volume form the fault activity Boolean vector [$\beta_j$] (*i.e.*, [$\beta_1 \dots \beta_i \dots \beta_n$]) of the subsurface earth volume. |

Overview

This disclosure describes stress and fault activity inversion using the principle of superposition. Given diverse input data, such as faults geometry, and selectable or optional data sets or data measures, including one or more of fault throw, dip-slip or slickenline directions, stress measurements, fracture data, secondary fault plane orientations, GPS data, InSAR data, geodetic data from surface tilt-meters, laser ranging, etc., the example system can quickly generate or recover numerous types of results. The systems and methods described herein apply the principle of superposition to fault surfaces with complex geometry in at least three dimensions (3D), and the faults are, by nature, of finite dimension and not infinite or semi-infinite. The results may be rendered in real-time and may include, for example, one or more of real-time stress, strain, and/or displacement parameters in response to one or more of a user query or an updated parameter; remote stress states for multiple tectonic events; prediction of intended future fracturing; differentiation of preexisting fractures from induced fractures; and so forth. The diverse input data can be derived from well bore data, seismic interpretation, field observation, etc.

The example systems and methods described below are applicable to many different reservoir and subsurface operations, including, without limitation, exploration and production operations for natural gas and other hydrocarbons, storage of natural gas, hydraulic fracturing and matrix stimulation to increase reservoir production, water resource management including development and environmental protection of aquifers and other water resources, capture and underground storage of carbon dioxide ($CO_2$), and so forth.

In an example implementation, a system applies a 3D boundary element technique using a principle of superposition that applies to linear elasticity for heterogeneous, isotropic whole-space *(i.e.,* considering effect of the earth surface) or half-space *(i.e.,* without considering effect of the earth surface) media. Based on pre-computed values of contributions from independent stress tensors and individual faults, the example system can assess a cost function to generate real-time results, such as stress, strain, and displacement parameters for any point in a subsurface volume. Specifically, the real-time results are generated by optimizing *(e.g.,* minimizing) the cost function using a Monte Carlo method to vary the far field stress value *(e.g.,* by assigning different values to the optimization parameters) and activate or deactivate fault influence *(i.e.,* by assigning 1 or 0 to the fault activity Boolean variables).

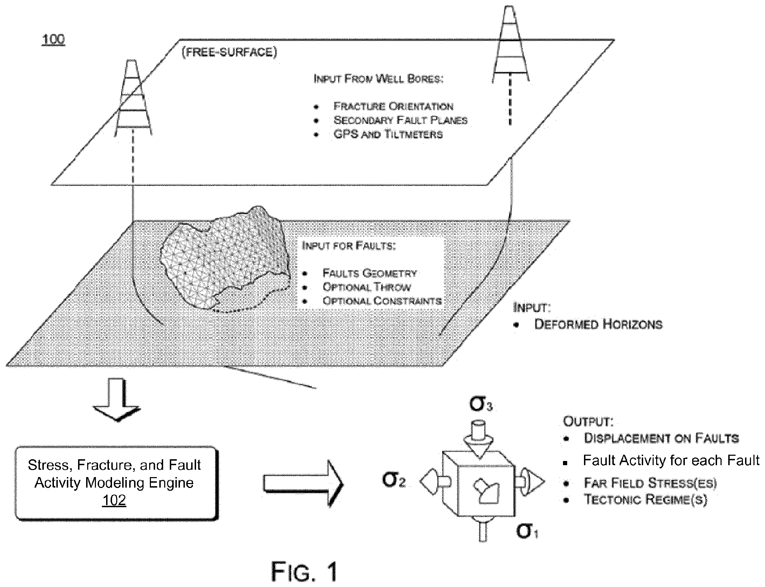

FIG. 1 shows an example stress, fracture, and fault activity modeling system 100. The example system 100 may be capable of solving a variety of geomechanical problems. The faults geometry may be known (and optionally, imposed inequality constraints such as normal, thrust, etc., may be known), and fault activity (active faults versus inactive faults) of certain faults may be known. The user may have access to one or more of data from well bores *(e.g.,* fracture orientation, in-situ stress measurements, secondary fault planes), geodetic data *(e.g.,* InSAR, GPS, and tilt-meter), and/or as interpreted horizons. An example stress, fracture, and fault activity modeling engine 102 and/or corresponding example methods can recover the remote stress state and tectonic regime for relevant tectonic event(s), fault activity over geological time, as well as displacement discontinuity on faults, and estimate the displacement and perturbed strain and stress fields anywhere within the system, for example.

Using the principle of superposition, the example stress, fracture, and fault activity modeling system 100 or engine 102 may perform each of three linearly independent simulations of stress tensor models in constant time regardless of the complexity of each underlying model. In other words, the total computation time for three linearly independent simulations is substantially constant regardless of the complexity of each underlying model. Each model does not have to be re-computed for subsequent operations of the example stress, fracture, and fault activity modeling system 100 or engine 102. Then, as introduced above, applications for the example system 100 may include one or more of stress interpolation and fracture modeling, recovery of tectonic event(s) and fault activity, quality control on interpreted faults, real-time computation of perturbed stress and displacement fields when the user is performing one or more of parameters estimation, prediction of fracture propagation, distinguishing preexisting fractures from induced fractures, and numerous other applications.

Example Environment

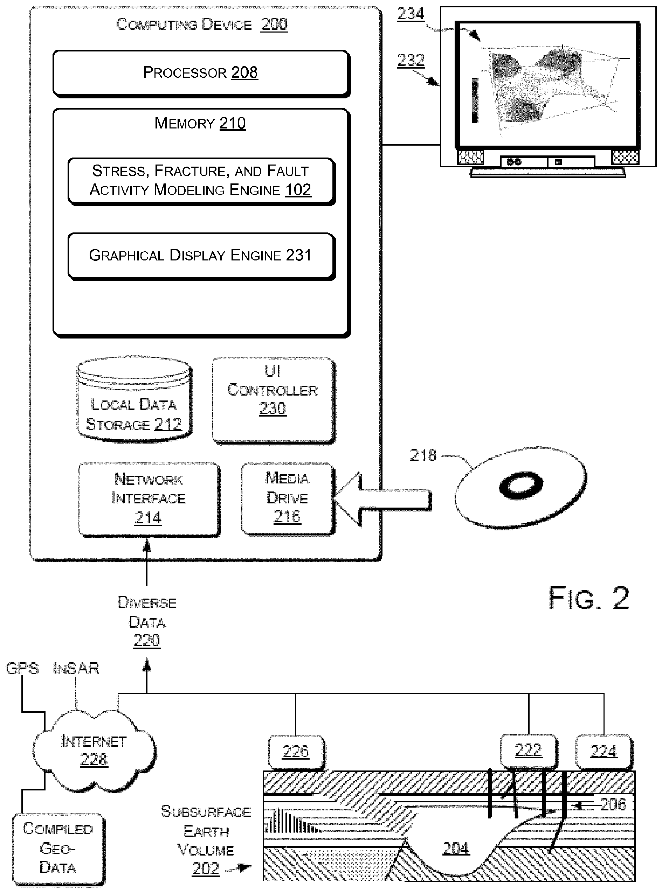

FIG. 2 shows the example system 100 of FIG. 1 in the context of a computing environment, in which stress, fracture, and fault activity modeling using the principle of superposition can be performed.

In the illustrated example, the computing device 200 is communicatively coupled via sensory devices (and control devices) with a real-world setting, for example, an actual subsurface earth volume 202, reservoir 204, depositional basin, seabed, etc., and associated wells 206 for producing a petroleum resource, for water resource management, or for carbon services, and so forth.

In the shown implementation, a computing device 200 implements a component, such as the stress, fracture, and fault activity modeling engine 102 and graphical display engine 231. The stress, fracture, and fault activity modeling engine 102 and graphical display engine are illustrated as software, but can be implemented as hardware or as a combination of hardware and software instructions.

The stress, fracture, and fault activity modeling engine 102 includes functionality to perform an analysis, e.g., using a cost function of a stress ratio value, an orientation value, and a fault activity Boolean vector. Performing the analysis is discussed below. In one or more embodiments, the stress ratio value may be defined as $\Phi$ in the equations below. The stress, fracture, and fault activity modeling engine 102 may further include functionality to calculate, for a particular point in the stress domain diagram, a fracture prediction, a perturbed stress field, a fault activity, and/or a displacement field.

When executing, such as on processor 208, the stress, fracture, and fault activity modeling engine 102 is operatively connected to a graphical display engine 231. For example, the stress, fracture, and fault activity modeling engine 102 may be part of the same software application as the graphical display engine 231, the graphical display engine 231 may be a plug-in for the stress, fracture, and fault activity modeling engine 102, or another method may be used to connect the graphical display engine 231 to the stress, fracture, and fault activity modeling engine 102. The graphical display engine 231 includes functionality to display various results of the stress, fracture, and fault activity modeling engine 102. Continuing with FIG. 2, the graphical display engine 231 further includes functionality to receive a selection of a point, request a fracture prediction, a perturbed stress field, and/or a displacement field for the particular point from the stress, fracture, and fault activity modeling engine 102 in response to the selection, and present the fracture prediction, the perturbed stress field, and/or the displacement field. In one or more embodiments, the graphical display engine 231 is operatively connected to the user interface controller 230 and display 232.

The computing device 200 may be a computer, computer network, or other device that has a processor 208, memory 210, data storage 212, and other associated hardware such as a network interface 214 and a media drive 216 for reading and writing a removable storage medium 218. The removable storage medium 218 may be, for example, a compact disc (CD); digital versatile disk / digital video disc (DVD); flash drive, etc. The removable storage medium 218 contains instructions, which when executed by the computing device 200, cause the computing device 200 to perform one or more example methods described herein. Thus, the removable storage medium 218 may include instructions for implementing and executing the example stress, fracture, and fault activity modeling engine 102 and/or the graphical display engine 231. At least some parts of the example stress, fracture, and fault activity modeling engine 102 can be stored as instructions on a given instance of the removable storage medium 218, removable device, or in local data storage 212, to be loaded into memory 210 for execution by the processor 208. Specifically, software instructions or computer readable program code to perform embodiments may be stored, temporarily or permanently, in whole or in part, on a non-transitory computer readable medium such as a CD, a DVD, a local or remote storage device, local or remote memory, a diskette, or any other computer readable storage device.

Although the illustrated example stress, fracture, and fault activity modeling engine 102 and the graphical display engine 231 are depicted as a program residing in memory 210, a stress, fracture, and fault activity modeling engine 102 and/or the graphical display engine 231 may be implemented as hardware, such as an application specific integrated circuit (ASIC) or as a combination of hardware and software.

In this example system, the computing device 200 receives incoming data 220, such as faults geometry and many other kinds of data, from multiple sources, such as well bore measurements 222, field observation 224, and seismic interpretation 226. The computing device 200 can receive one or more types of data sets 220 via the network interface 214, which may also receive data from a network (e.g., the Internet 228), such as GPS data and InSAR data.

The computing device 200 may compute (or calculate) and compile modeling results, simulator results, and control results, and a display controller 230 may output geological model images and simulation images and data to a display 232. The images may be 2D or 3D simulation 234 of stress, fracture, and fault activity results using the principle of superposition. The example stress, fracture, and fault activity modeling engine 102 may also generate one or more visual user interfaces (UIs) for input and/or display of data.

The example stress, fracture, and fault activity modeling engine 102 may also generate or ultimately produce control signals to control field operations associated with the subsurface volume. For example, the field operations may be performed using drilling and exploration equipment, well control injectors and valves, or other control devices in real-world control of the reservoir 204, transport and delivery network, surface facility, and so forth.

Thus, an example system 100 may include a computing device 200 and interactive graphics display unit 232. The computing environment of the example system 100 as a whole may constitute simulators, models, and the example stress, fracture, and fault activity modeling engine 102.

Example Engine

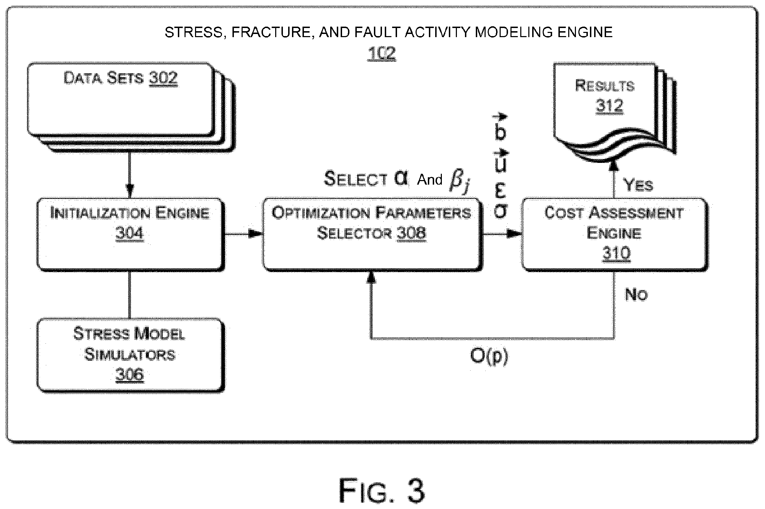

FIG. 3 shows the example stress, fracture, and fault activity modeling engine 102 in greater detail than in FIG. 1 and FIG. 2. The illustrated implementation is one example configuration for the sake of description, to introduce features and components of an engine that performs the example stress, fracture, and fault activity modeling using the principle of superposition. The illustrated components are examples. Different configurations or combinations of components than those shown may be used to perform the stress, fracture, and fault activity modeling functions, and different or additional components may also be used. As introduced above, the example stress, fracture, and fault activity modeling engine 102 can be implemented in hardware, or in combinations of hardware and software. Illustrated components are communicatively coupled with each other for communication as desired. Arrows are shown to suggest process flow or data flow, since the components can communicate with each other as desired.

The example stress, fracture, and fault activity modeling engine 102 illustrated in FIG. 3 includes a buffer for data sets 302 or at least access to the data sets 302, an initialization engine 304, stress model simulators 306 or at least an access to the stress model simulators 306, an optimization parameters selector 308, a cost assessment engine 310, and a buffer or output for results 312. These components are shown for descriptive purposes. Other components, or other arrangement of the components, can enable various implementations of the example stress, fracture, and fault activity modeling engine 102. The functionality of the example stress, fracture, and fault activity modeling engine 102 will be described next.

Operation of the Example System and Engine

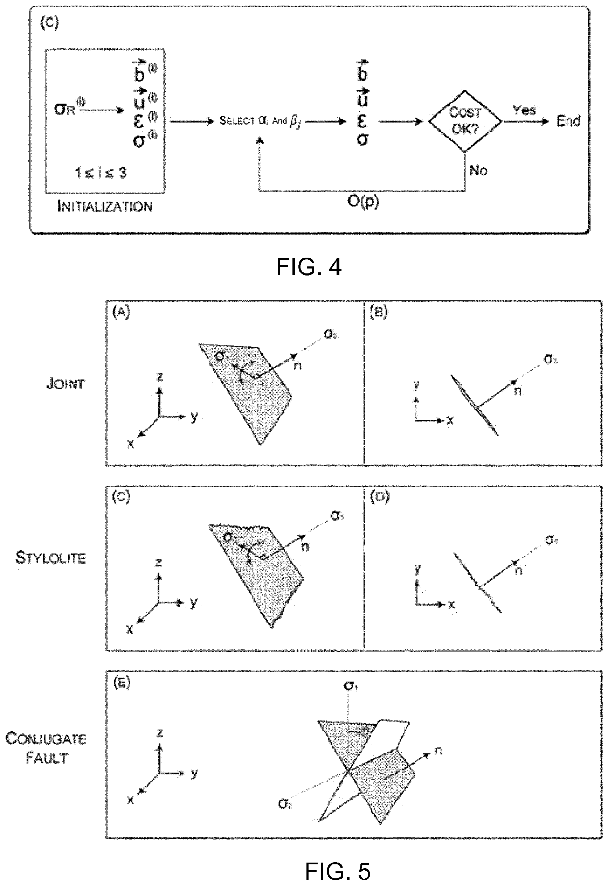

FIG. 4 shows a method for recovering paleostress and fault activity, including techniques that utilize the principle of superposition that reduce the complexity of the model (in some cases the complexity of the model is highly reduced). The example method shown in FIG. 4 may be implemented by the example stress, fracture, and fault activity modeling engine 102. For example, in one implementation the initialization engine 304, through the stress model simulators 306, generates three pre-computed models of the far field stress associated with a subsurface volume 202. These three pre-computed models correspond to three linearly independent coordinates (*i.e.*, (i) orientation toward the North, and (ii) & (iii) the two principal magnitudes) of the subsurface volume 202 and are referred to as the three superpositioned models. In other words, the three superpositioned models are superposed to represent a complete far field stress model of the subsurface volume 202. For each of the three superposed models, the initialization engine 304 further pre-computes certain values, for example, one or more of displacement, strain, and/or stress values, as a sum of individual fault contributions. In one or more embodiments, the displacement, strain, and/or stress values, as well as the corresponding individual fault contributions are pre-computed by the initialization engine 304 for each observation point P in a subsurface earth volume. The optimization parameters selector 308 iteratively scales one or more of the displacement, strain, and/or stress values for each superpositioned model and selectively activates faults to minimize a cost at the cost assessment engine 310. In one or more embodiments, the optimization parameters selector 308 scales one or more of the displacement, strain, and/or stress values for each superpositioned model by selecting values of the optimization parameters ($\alpha_i$) for the three superpositioned model. In one or more embodiments, the optimization parameters selector 308 selectively activates faults by selecting values of the fault activity Boolean variables ($\beta_i$). In particular, a fault j may be selectively activated (*i.e.,* the contribution of the fault to the model is enabled) by selecting 1 for the value of the corresponding fault activity Boolean variable ($\beta_i$). Conversely, a fault j may be selectively deactivated (*i.e.,* the contribution of the fault to the model is disabled) by selecting 0 for the value of the corresponding fault activity Boolean variable ($\beta_i$). Mathematically, selectively activates faults of the subsurface earth model is performed by selecting the vector value of the fault activity Boolean vector [$\beta_i$] (*i.e.,* [$\beta_1 ... \beta_i ... \beta_n$]) where n is the number of faults or fault patches) in the subsurface earth model. In one or more embodiments, the selected values of the optimization parameters ($\alpha_i$) and the values of the fault activity Boolean vector [$\beta_i$] apply to all observation points in the subsurface earth volume.

In one or more embodiments, Monte Carlo method is used to minimize the cost function. Typically, the optimization parameters scaling the displacement, strain, and/or stress values are assigned continuous values by the optimization parameters selector (308) using the Monte Carlo method. In contrast, in the Monte Carlo method, the fault activity Boolean variables activating the faults are assigned binary values by the optimization parameters selector (308) where the binary value 1 represents an active fault and the binary value 0 represents an inactive fault.

In the Monte Carlo method, far field stress parameters are modeled and simulated to generate a set of the variables for each of the three superposed models. As an example, the variables may include: displacement on a fault, the displacement field at any data point or observation point, a strain tensor at each observation point, and the tectonic stress. The optimization parameters selector 308 selects alpha and beta parameters for each Monte Carlo simulation, *i.e.,* a set of "$\alpha_i$" and "$\beta_j$" for the three superposed models to act as changeable optimization parameters for iteratively converging on values for these variables in order to minimize one or more cost functions, to be described below. In one implementation, the optimization parameters selector 308 selects optimization parameters at random as well as randomly activates faults to begin converging the scaled strain, stress, and or displacement parameters towards the lowest value of the cost function. When the scaled optimization parameters and fault activity Boolean variables are assessed to have the lowest cost of the cost function, the scaled strain, stress, and/or displacement parameters can be applied to generate results 312, such as a new tectonic stress and fault activity.

Because the example method of FIG. 4 uses pre-computed values for contributions from individual faults to the three linearly independent stress models, the example method or the stress, fracture, and fault activity modeling engine 102 can provide results quickly, even in real-time in some cases, by superposing these pre-computed values and selectively activating contributions from individual faults. As introduced above, the stress, fracture, and fault activity modeling engine 102 can quickly recover multiple tectonic events and fault activity responsible for present conditions of the subsurface volume 202 as compared to other methods, or more quickly discern induced fracturing from preexisting fracturing than conventional techniques, or provide real-time parameter estimation as the user varies a stress parameter, or can rapidly predict fracturing, and so forth.

While certain paleostress inversion methods may apply a full mechanical scenario, the stress, fracture, and fault activity modeling engine 102 improves upon certain techniques by using multiple types of data in the data sets 302 to construct the cost function. Data sets 302 to be used for constructing the cost function are generally of two types: those which provide orientation information (such as fractures, secondary fault planes with internal friction angle, and fault striations, etc.), and those which provide magnitude information (such as fault slip, GPS data, InSAR data, etc.). Some paleostress inversion methods are computed using slip measurements on fault planes.

The example method diagrammed in FIG. 4, which can be executed by the stress, fracture, and fault activity modeling engine 102, extends inversion for numerous kinds of data, and provides a much faster modeling engine 102 for inverting the tectonic stress and fault activity. For example, a resulting fast and reliable stress and fault activity inversion is described below. The different types of data can be weighted and combined together. The stress, fracture, and fault activity modeling engine 102 can quickly recover the tectonic event(s) as well as displacement discontinuity on faults using diverse data sets and sources, and then obtain an estimate of the displacement and perturbed strain and stress field anywhere within the medium, using data available from seismic interpretation, well bores, and field observations. Applying the principle of superposition allows a user to execute parameters estimation in a very fast manner.

A numerical technique for performing the example methods is described next. Then, a reduced remote tensor used for simulation is described, and then the principle of superposition itself is described. An estimate of the complexity is also described.

In one implementation, the stress model simulators 306 of the stress, fracture, and fault activity modeling engine 102 can be executed using IBEM3D, a successor of POLY3D (POLY3D is described by F. Maerten, P. G. Resor, D. D. Pollard, and L. Maerten, Inverting for slip on three-dimensional fault surfaces using angular dislocations, Bulletin of the Seismological Society of America, 95:1654-1665, 2005, and by A. L. Thomas, Poly3D: a three-dimensional, polygonal element, displacement discontinuity boundary element computer program with applications to fractures, faults, and cavities in the earth's crust, Master's thesis, Stanford University, 1995.) IBEM3D is a boundary element code based on the analytical solution of an angular dislocation in a homogeneous or inhomogeneous elastic whole-space or half-space. An iterative solver is employed for speed considerations and for parallelization on multi-core architectures. (see, for example, F. Maerten, L. Maerten, and M. Cooke, Solving 3d boundary element problems using constrained iterative approach, Computational Geosciences, 2009.) However, inequality constraints cannot be used as they are nonlinear and the principle of superposition does not apply. In the selected code, faults are represented by triangulated surfaces with discontinuous displacement. The advantage is that three-dimensional fault surfaces more closely approximate curvi-planar surfaces and curved tip-lines without introducing overlaps or gaps.

Mixed boundary conditions may be prescribed, and when traction boundary conditions are specified, the initialization engine 304 solves for unknown Burgers's components. After the system is solved and results of the three superposed models are generated, it is possible to compute (or calculate) anywhere, within the whole-space or half-space, displacement, strain or stress at observation points, as a post-process of linearly combining results of the three superposed models. Specifically, the stress field at any observation point is given by the perturbed stress field due to slipping faults plus the contribution of the remote stress. Consequently, obtaining the perturbed stress field due to the slip on faults is not enough. Moreover, the estimation of fault slip from seismic interpretation is given along the dip-direction. Nothing is known along the strike-direction, and a full mechanical scenario may be involved to recover the unknown components of the slip vector as it will impact the perturbed stress field. Changing the imposed far field stress (orientation and or relative magnitudes) modifies the slip distribution and consequently the perturbed stress field. In general, a code such as IBEM3D is well suited for computing the full displacement vectors on faults, and may be optimized using an $\mathcal{H}$-matrix technique. The unknown for purposes of modeling remains the estimation of the far field stress that has to be imposed as boundary conditions in the inversion process. In one or more embodiments, the magnitude and orientation of the far field stress are determined in the inversion process based on a given set of fault surfaces using the aforementioned Monte Carlo method. Specifically, the set of fault surfaces is described as a known fault geometry while the far field stress is modeled by mathematical formulations described below.

In an example method, which may be implemented by the stress and fracture modeling engine 102, a model composed of multiple fault surfaces is subjected to a constant far field stress tensor $\sigma_R$ defined in the global coordinate system by Equation (2) assuming a sub-horizontal far field stress (but the present methodology is not restricted to that case):

$$\sigma_{\mathbf{R}} = R_{\theta,\varphi,\Psi} \begin{bmatrix} \sigma_h & & \\ & \sigma_H & \\ & & \sigma_v \end{bmatrix} R^{\mathsf{T}}_{\theta,\varphi,\Psi} \tag{2}$$

Since the addition of a hydrostatic stress does not change $\sigma_R$, the far field stress tensor $\sigma_R$ can be written as in Equation (3), where $R_\theta$ is the rotation matrix along the vertical axis (clockwise) with $\theta \in [0,\pi]$:

$$\sigma_{\mathbf{R}} = R_\theta \begin{bmatrix} \sigma_h - \sigma_v & \\ & \sigma_H - \sigma_v \end{bmatrix} R^{\mathsf{T}}_\theta \tag{3}$$

Using the above embodiment, the definition of a regional stress has three unknowns, namely $(\sigma_h - \sigma_v)$, $(\sigma_H - \sigma_v)$, and $\theta$. Expressing Equation (2) using $\sigma_1$, $\sigma_2$ and $\sigma_3$ for the three Andersonian fault regimes (Anderson, E., The dynamics of faulting. Edinburgh Geol. Soc., 1905, 8(3):387-402), factorizing with $(\sigma_1-\sigma_3)$ and introducing the stress ratio, $R = (\sigma_2-\sigma_3)/(\sigma_1-\sigma_3) \in [0,1]$, the following Equation (22) results as follows:

$$\boldsymbol{\sigma_R} = \begin{cases} (\sigma_1 - \sigma_3)\mathrm{R}_\theta \begin{bmatrix} -1 & & \\ & \mathrm{R}-1 & \\ & & \end{bmatrix} \mathrm{R}_\theta^\mathsf{T} & \text{for Normal fault regime} \\[2mm] (\sigma_1 - \sigma_3)\mathrm{R}_\theta \begin{bmatrix} -\mathrm{R} & & \\ & 1-\mathrm{R} & \\ & & \end{bmatrix} \mathrm{R}_\theta^\mathsf{T} & \text{for Wrench fault regime} \\[2mm] (\sigma_1 - \sigma_3)\mathrm{R}_\theta \begin{bmatrix} \mathrm{R} & & \\ & 1 & \\ & & \end{bmatrix} \mathrm{R}_\theta^\mathsf{T} & \text{for Thrust fault regime} \end{cases} \quad (22)$$

By changing R to R' as shown in equation (23) as follows, a unique stress shape parameter R' is created for the three fault regimes together:

$$\mathrm{R}' \in [\mathbf{0,3}] = \begin{cases} \mathbf{R} & \in [\mathbf{0,1}] & \textbf{for Normal fault regime} \\ \mathbf{2-R} & \in [\mathbf{1,2}] & \textbf{for Wrench fault regime} \\ \mathbf{2+R} & \in [\mathbf{2,3}] & \textbf{for Thrust fault regime} \end{cases} \quad (23)$$

Omitting the scaling factor ($\sigma_1$ - $\sigma_3$), the regional stress tensor in (23) is defined with two parameters, $\theta$ and R'. This definition may be used as shown below to determine ($\theta$, R') according to the data utilized.

Principle of Superposition

The example stress, fracture, and fault activity modeling engine 102 may use the principle of superposition, a well-known principle in the physics of linear elasticity, to recover the displacement, strain and stress at any observation point P using the pre-computed specific values from linearly independent simulations. The principle of superposition stipulates that a given value $f$ can be determined by a linear combination of specific solutions.

In the stress, fracture, and fault activity modeling engine 102, recovering a far field stress implies recovering the three parameters ($\alpha_1$, $\alpha_2$, $\alpha_3$). Therefore, the number of linearly independent solutions used is three. In other words, in Equation (14):

$$\begin{aligned} f = F(\sigma) &= F\left(\alpha_1 \sigma^{(1)} + \alpha_2 \sigma^{(2)} + \alpha_3 \sigma^{(3)}\right) \\ &= \alpha_1 F\left(\sigma^{(1)}\right) + \alpha_2 F\left(\sigma^{(2)}\right) + \alpha_3 F\left(\sigma^{(3)}\right) \\ &= \alpha_1 f_1 + \alpha_2 f_2 + \alpha_3 f_3 \end{aligned} \quad (14)$$

where ($\alpha_1$, $\alpha_2$, $\alpha_3$) are real numbers, and $\sigma^{(i)}$ (for $i$ = 1 to 3) are three linearly independent remote stress tensors. In one or more embodiments, the right hand side of Equation (14) (i.e., $\alpha_1 f_1 + \alpha_2 f_2 + \alpha_3 f_3$) is referred to as a superpositioned result and each of the three terms $\alpha_1 f_1$, $\alpha_2 f_2$, and $\alpha_3 f_3$ is referred to as an linearly independent contribution to the superpositioned result. In particular, each linearly independent contribution is scaled in the superpositioned result by a corresponding optimization parameter. If $F$ is selected to be the strain, stress or displacement Green's functions, then the resulting values $\epsilon$, $\sigma$, and $u$, at $P$ can be expressed as a combination of three specific solutions, as shown below. Thus, the strain, stress and displacement field for a tectonic loading are a linear combination of the three specific solutions, and are given by Equation (15):

$$\begin{cases} \epsilon_P = \alpha_1 \varepsilon_P^{(1)} + \alpha_2 \varepsilon_P^{(2)} + \alpha_3 \varepsilon_P^{(3)} \\ \sigma_P = \alpha_1 \sigma_P^{(1)} + \alpha_2 \sigma_P^{(2)} + \alpha_3 \sigma_P^{(3)} \\ u_P = \alpha_1 u_P^{(1)} + \alpha_2 u_P^{(2)} + \alpha_3 u_P^{(3)} \end{cases} \quad (15)$$

Similarly, using ($\alpha_1, \alpha_2, \alpha_3$) allows recovery of the displacement discontinuities (i.e., slips) on the faults, as in Equation (16):

$$b_e = \alpha_1 b_e^{(1)} + \alpha_2 b_e^{(2)} + \alpha_3 b_e^{(3)} \quad (16)$$

9

and any far field stress is also given as a combination of the three parameters, as in Equation (17):

$$\sigma_R = \alpha_1 \sigma_R^{(1)} + \alpha_2 \sigma_R^{(2)} + \alpha_3 \sigma_R^{(3)} \qquad (17)$$

Faults Contributions

Equation (15) can be further decomposed as a sum of fault contributions. For instance, $\varepsilon_p$, $\sigma_p$ and $u_p$ contain the contribution of each fault, which are summed to give the former.

As an example, $\sigma_p$ is decomposed as follow:

$$\sigma_p = \Sigma_n \sigma_p^{\ i}$$

where n is the number of faults in the model, and $\sigma_p^{\ i}$ is the perturbed stress field contribution from fault i.

In the general case, the following notations may be used to formulate the strain, stress or displacement represented by $V(P)$ as a function of data point $P$.

Let $\alpha_i$ represents the coefficients for the superposition ($i \in [0,3]$).

Let $\beta_j$ (0 for inactive and 1 for active) being the fault activity of the $j^{th}$ fault or fault patch.

Let $V_i^{F_j}(P)$ being the value (scalar, vector or tensor) at data point $P$ induced by the $j^{th}$ fault or fault patch and from each linearly independent simulation $i$.

Let $V(P)$ being the value at data point $P$ induced by the all active faults or fault patches.

TABLE 1 shows an example algorithm to initialize a data structure for storing decomposed values of $V(P)$ for each linearly independent simulation $i$. As shown in TABLE 1, for each data point $P$, each linearly independent simulation $i$, and each fault $F_j$, a data storage is initialized for storing $V_i^{F_j}(P)$. In other words, the initial value $V_i(P)$ for each linearly independent simulation $i$ is to be computed as a sum of contributions $V_i^{F_j}(P)$ from each fault or fault patch $F_j$. Considering a model made of $n$ faults or fault patches, $V_i(P)$ combines 3n values at each data point $P$. For $m$ data points in a subsurface volume, $3nm$ values (scalars, vectors or tensors) are initialized and stored by the example algorithm shown in TABLE 1.

TABLE 1

ALGO 1: INITIALIZATION OF $V(P)$ for one simulation $i$

```
n  = number of faults or fault patches
P  is a data point
// Compute a value, V(P) (value can be displacement, strain or
// stress), at P  for a given remote stress provided by α
For each linearly independent simulation i ∈ [1,3]
```

$$V_i(P) = V_i^{F_1}(P) + V_i^{F_2}(P) + \cdots + V_i^{F_n}(P) = \sum_{j=1}^{n} V_i^{F_j}(P)$$

```
end
```

If the tectonic stress $\sigma_R$ is given and three independent solutions are known, there exists a unique triple $(\alpha_1, \alpha_2, \alpha_3)$ for which Equation (17) is honored, and Equations (15) and (16) can be applied.

In matrix form, Equation (17) is written in the format shown in Equation (18):

$$\begin{bmatrix} \sigma_{00}^{(1)} & \sigma_{00}^{(2)} & \sigma_{00}^{(3)} \\ \sigma_{01}^{(1)} & \sigma_{01}^{(2)} & \sigma_{01}^{(3)} \\ \sigma_{11}^{(1)} & \sigma_{11}^{(2)} & \sigma_{11}^{(3)} \end{bmatrix} \begin{Bmatrix} \alpha_1 \\ \alpha_2 \\ \alpha_3 \end{Bmatrix} = \begin{Bmatrix} \sigma_{00}^{R} \\ \sigma_{01}^{R} \\ \sigma_{11}^{R} \end{Bmatrix} \tag{18}$$

or, in compact form, as in Equation (19):

$$A_\sigma \alpha = \sigma_R \tag{19}$$

Since the three particular solutions $\sigma^{(i)}$ are linearly independent, the system can be inverted, which gives Equation (20):

$$\alpha = A_\sigma^{-1} \sigma_R \tag{20}$$

In Equation (20), $A_\sigma^{-1}$ is pre-computed by the initialization engine 304. Given a user-selected remote stress $\sigma_R$, the stress, fracture, and fault activity modeling engine 102 recovers the three parameters $(\alpha_1, \alpha_2, \alpha_3)$, then the fault slip (*i.e.*, displacement discontinuity on the faults) and the displacement, strain and stress field are computed (or calculated) in real-time using Equations (16) and (15), respectively. To do so, the three particular solutions of the displacement, strain and stress, as well as displacement discontinuity, are stored at initialization at each observation point. In one implementation, the example stress, fracture, and fault activity modeling engine 102 enables the user to vary the orientation and magnitude of $\sigma_R$, and to interactively display the associated deformation and perturbed stress field.

Fast computation of a value (strain, stress, or displacement):

TABLE 2 shows an example algorithm to compute $V(P)$. Given the superposition coefficient (*i.e.*, optimization parameter) $\alpha_i$ and the fault activity Boolean variable $\beta_j$, the value at data point P is given by:

$$V(P) = \sum_{i=1}^{3} \sum_{j=1}^{n} \alpha_i \beta_j V_i^{F_j}(P) \tag{22}$$

with $\alpha \in \mathbf{R}$ and $\beta \in \{0,1\}$. In one or more embodiments, $V_i^{F_j}(P)$ is pre-computed for each i and j. Specifically, each linearly independent contribution $\sum_{j=1}^{n} \beta_j V_i^{F_j}(P)$ in Equation (22) to the superpositioned result $V(P)$ is a selective combination of n pre-computed results where each pre-computed result $V_i^{F_j}(P)$ corresponds to sole contribution from one of the faults $F_j$ in the subsurface volume. In addition, each linearly independent contribution $\sum_{j=1}^{n} \beta_j V_i^{F_j}(P)$ in Equation (22) is scaled in the superpositioned result $V(P)$ by a corresponding optimization parameter $\alpha_i$.

These pre-computed $V_i^{F_j}(P)$ allow quick computation of the value $V$ at data point P when some faults or fault patches are activated or deactivated.

TABLE 2

## ALGO 2: FAST COMPUTING OF $V(P)$

$n$ faults (or fault patches)

$P$ is a data point

$V(P) = \mathbf{0}$

For all fault or fault patches, $F_j$ , with activity $\beta_j$

$$V(P)+= \beta_j \left(\alpha_1 V_1^P (F_j) + \alpha_2 V_2^P (F_j) + \alpha_3 V_3^P (F_j)\right)$$

end

Paleostress inversion using data sets

As seen above, the main unknowns while doing forward modeling for the estimation of the slip distribution on faults, and consequently the associated perturbed stress field, are the orientation, the relative magnitudes of the far field stress $\sigma_R$, and the faults that are active at the particular geological time. As described above, these unknowns *(i.e., relative magnitudes of the far field stress $\sigma_R$, and the faults that are active at the particular geological time)* may be represented by the triple ($\alpha_1, \alpha_2, \alpha_3$) and the fault activity Boolean vector ($\beta_j$, with j in [1,n]).

If field measurements are known at some given observation points *(e.g.,* displacement, strain and/or stress, fractures orientation, secondary fault planes that formed in the vicinity of major faults, etc. in the data sets 302), then it is possible to recover the triple ($\alpha_1, \alpha_2, \alpha_3$) and the fault activity Boolean vector ($\beta_j$, with j in [1,n]), and therefore also recover the tectonic stress $\sigma_R$ and the corresponding tectonic regime. The next section describes the method of resolution and the cost functions used to minimize cost for different types of data sets 302.

Method of resolution

Applying a Monte Carlo technique allows the parameters ($\alpha_1, a_2, \alpha_3$) and ($\beta j$) to be found, which minimize the cost functions when given three pre-computed independent far field stresses (see Equation 15).

A simple sampling method can be performed by considering a (n+2)-dimensional domain, *i.e.,* ($\theta$ and R) and $\beta_j$. This (n+2)-domain is sampled randomly with $n_p$ points, and the associated cost function is used to determine the point of minimum cost. As defined in the coming sections with respect to various types of data sets 312, the cost function is a function dependent on optimization parameters ($\alpha_i$) and fault activity Boolean variables ($\beta_i$). In one or more embodiments, the Monte Carlo method is used to determine accepted values of the optimization parameters ($\alpha_i$) and fault activity Boolean variables ($\beta_i$) by minimizing the cost function. A refinement is then created around the selected point and the procedure is repeated with a smaller domain. TABLE 3 depicts a simplified version of the example procedure, for which there is no refinement. The example sampling method presented here can be greatly optimized by various techniques.

TABLE 3

## ALGO 3: FAULT ACTIVITY INVERSION

$cost = \mathbf{1}$

Let m being the number of points $P$

For all Monte-Carlo simulations

Random initialize $\beta_j$, $j \in [1,n]$ and $\beta_j = 0$ or $\mathbf{1}$

Random initialize $\alpha_i$, $i \in [1,3]$ and $\alpha_i \in \mathbb{R}$

For all data points $P$

$$V(P)+= \beta_j \left(\alpha_1 V_1^P (F_j) + \alpha_2 V_2^P (F_j) + \alpha_3 V_3^P (F_j)\right)$$

$$C +=cost(V(P))/m$$

```
            end
        if C < cost
                cost = C
                Activity = βⱼ
                Remote = αᵢ
        end
    end
```

While the above discussion presents one example formulation, other formulations may be used without departing from the scope of the claims.

Data Sets

The particularity of this method considers that many different kinds of data sets 302 can be used to constrain the inversion. Two groups of data are presented in the following sections: the first one includes orientation information and the second includes displacement and/or stress magnitude information.

Without magnitude information from the data set

For opening fractures (*e.g.*, joints, veins, dikes) the orientation of the normal to the fracture plane indicates the direction of the least compressive stress direction in 3D ($\sigma_3$). Similarly, the normals to pressure solution seams and stylolites indicate the direction of the most compressive stress ($\sigma_1$). Using measurements of the orientations of fractures, pressure solution seams, and stylolites as the data sets 312 allows the stress, fracture, and fault activity modeling engine 102 to recover the tectonic regime which generated such features.

At any observation point P, the local perturbed stress field can be determined from a numerical point of view by using three linearly independent simulations. FIG. 5 shows fracture and conjugate fault planes. FIG. 5(a) shows orientation of $\sigma_3$ relative to an opening fracture (joints, veins, dikes) given by its normal $\vec{n}$ in 3D. FIG. 5(b) shows the same as FIG. 5(a) except for an orientation of $\sigma_3$ relative to a joint given by its projected normal $\vec{n}$ *(e.g.,* trace on outcrop). FIG. 5(c) and FIG. 5(d) show the same as FIG. 5(a) and FIG. 5(b) except shown for a stylolite. FIG. 5(e) shows orientation of $\sigma_2$ and $\sigma_1$ relative to conjugate fault-planes given by one of the normal $\vec{n}$ in 3D and the internal friction angle $\theta$. The goal is to determine the best fit of the far field stress $\sigma_R$, and therefore the optimization parameters ($\alpha_1$, $\alpha_2$, $\alpha_3$) and fault activity Boolean variables ($\beta_i$), given some orientations of opening fracture planes for which the normals coincide with the directions of the least compressive stress $\sigma_3^P$ at *P,* or equivalently for which the plane of the fracture contains the most compressive stress ($\sigma_1$), as in FIG. 5(a) and FIG. 5(b).

By varying ($\alpha_1, \alpha_2, \alpha_3$) and the fault activity Boolean variables ($\beta_i$), the state of stress at any observation point P can be computed (or calculated) quickly using the three pre-computed models and the pre-computed contributions from individual faults. The cost function to minimize is given in Equation (22):

$$f_{frac}(\alpha_1, \alpha_2, \alpha_3) = \frac{1}{2m} \sum_P ((\vec{\sigma}_1^P . \vec{n}^P)^2 + (\vec{\sigma}_2^P . \vec{n}^P)^2)^{1/2} \qquad (22)$$

where "." is the dot-product, $\vec{n}$ is the normal to a fracture plane, and *m* is the number of observation points. Because the stress at a given point P is a function of the activated faults and the far field stress, $\sigma_1$ and $\sigma_2$ are dependent on values of the optimization parameters ($\alpha_1, \alpha_2, \alpha_3$) and fault activity Boolean variables ($\beta_i$). For example, such dependency may be represented by Equation (22) above. Accordingly, although not explicitly shown in Equation (22), the cost function $f_{frac}$ is dependent on both the optimization parameters ($\alpha_1, \alpha_2, \alpha_3$) and the fault activity Boolean variables ($\beta_i$).

The minimization of a function of the three parameters is expressed by Equation (23):

$$F_{frac} = \min_{\alpha_1, \alpha_2, \alpha_3} \{ f_{frac}(\alpha_1, \alpha_2, \alpha_3) \} \qquad (23)$$

Similarly, for pressure solution seams and stylolites, the cost function is defined as in Equation (22) using the least compressive stress $\sigma_3$ as in Equation (24) (see FIG. 5(c) and FIG. 5(d)):

$$f_{styl}(\alpha_1, \alpha_2, \alpha_3) = \frac{1}{2m} \sum_P ((\overrightarrow{\sigma_3^P} . \vec{n}^P)^2 + (\overrightarrow{\sigma_2^P} . \vec{n}^P)^2)^{1/2} \qquad (24)$$

Similar to Equation (22), although not explicitly shown in Equation (24), the cost function $f_{styl}$ is dependent on both the optimization parameters ($\alpha_1$, $\alpha_2, \alpha_3$) and the fault activity Boolean variables ($\beta_i$).

Using secondary fault planes

The orientation of secondary fault planes that develop in the vicinity of larger active faults may be estimated using a Coulomb failure criteria, defined by Equation (25):

$$\tan(2\theta) = 1/\mu \qquad (25)$$

where $\theta$ is the angle of the failure planes to the maximum principal compressive stress $\sigma_1$ and $\mu$ is the coefficient of internal friction. Two conjugate failure planes intersect along $\sigma_2$ and the fault orientation is influenced by the orientation of the principal stresses and the value of the friction.

The cost function is therefore defined by Equation (26):

$$f_{fault}(\alpha_1, \alpha_2, \alpha_3) = \frac{1}{2m} \sum_P \left[ (\overrightarrow{\sigma_2^P} . \vec{n}^P)^2 + \left( \frac{|sin^{-1}(\overrightarrow{\sigma_1^P} . \vec{n}^P)| - \theta}{\pi} \right)^2 \right]^{1/2} \qquad (26)$$

where $\sigma_1$ is the direction of the most compressive stress and $\sigma_2$ is the direction of the intermediate principal stress. The first term of the right hand side in Equation (26) maintains an orthogonality between the computed $\sigma_2$ and the normal of the fault plane, whereas the second term ensures that the angle between the computed $\sigma_1$ and the fault plane is close to $\theta$ (see FIG. 5(e)). Similar to Equation (22), although not explicitly shown in Equation (26), the cost function $f_{fault}$ is dependent on both the optimization parameters ($\alpha_1, \alpha_2, \alpha_3$) and the fault activity Boolean variables ($\beta_i$).

Using fault striations

In the case of fault striations, the cost function is defined as in Equation (27):

$$f_{stri}(\alpha_1, \alpha_2, \alpha_3) = \frac{1}{m} \sum_P (1 - (1 - \vec{d}_e^c . \vec{d}_e^m)^2)^{1/2} \qquad (27)$$

where $\vec{d}_e^c$ represents the normalized slip vector from a simulation for a given set of optimization parameters ($\alpha_1$, $\alpha_2, \alpha_3$) and fault activity Boolean variables ($\beta_i$), and $\vec{d}_e^m$ represent the measured slip vector. Accordingly, although not explicitly shown in Equation (27), the cost function $f_{stri}$ is dependent on both the optimization parameters ($\alpha_1, \alpha_2, \alpha_3$) and the fault activity Boolean variables ($\beta_i$). For example, such dependency may be represented by Equation (22) above.

Data sets containing magnitude information

The magnitude of displacements may be used to determine the stress orientation, as well as the magnitude of the remote stress tensor, instead of just the principal stress ratio.

To do so, the procedure is similar to that described previously. However, given Equations (15) and (16), it is evident that there exists a parameter $\delta$ for which the computed displacement discontinuity on faults and the displacement, strain and stress fields at observation points scale linearly with the imposed far field stress. In other words, as in Equation (28):

$$\begin{cases} \delta\sigma_R \Rightarrow \delta b_e \\ \delta\sigma_R \Rightarrow \delta u_P \\ \delta\sigma_R \Rightarrow \delta\varepsilon_P \\ \delta\sigma_R \Rightarrow \delta\sigma_P \end{cases} \qquad (28)$$

This leads to the following property:

Property 1: Scaling the far field stress by $\delta \in \Re$ scales the displacement discontinuity on faults as well as the displacement, strain, and stress fields at observation points by $\delta$.

Using this property, one or more measurements at data points *(e.g.,* all measurements) are globally normalized before any computation and the scaling factor is noted (the simulations are also normalized, but the scaling factor is irrelevant). After the system is solved, the recovered far field stress, displacement and stress fields are scaled back by a factor of $\delta_m^{-1}$.

Using GPS data

In the case of a GPS data set, the cost function is defined in Equation (29):

$$f_{gps}(\alpha_1, \alpha_2, \alpha_3) = \frac{1}{2m}\sum_P\left[\left(1 - \frac{\vec{u}_P^{m}.\vec{u}_P^{c}}{\|\vec{u}_P^{c}\|\|\vec{u}_P^{m}\|}\right)^2 + \left(1 - \frac{\|\vec{u}_P^{m}\|}{\|\vec{u}_P^{c}\|}\right)^2(\vec{u}_P^{c} - \vec{u}_P^{m})^2\right]^{1/2} \quad (29)$$

where $\vec{u}_P^{c}$ is the globally normalized computed elevation change for a given set of optimization parameters $(\alpha_1, \alpha_2, \alpha_3)$ and fault activity Boolean variables $(\beta_j)$, and $\vec{u}_P^{m}$ is the globally normalized measured elevation changed at point P from the horizon. Accordingly, although not explicitly shown in Equation (29), the cost function $f_{gps}$ is dependent on both the optimization parameters $(\alpha_1, \alpha_2, \alpha_3)$ and the fault activity Boolean variables $(\beta_j)$. For example, such dependency may be represented by Equation (22) above. The first term on the right hand side in Equation (29) represents a minimization of the angle between the two displacement vectors, whereas the second term represents a minimization of the difference of the norm.

Using InSAR data

When using an InSAR data set, there may be two possibilities. Either the *global* displacement vectors of the measures are computed (or calculated) using the displacement u along the direction of the satellite line of sight $\vec{s}$, in which case Equation (30) is used:

$$\vec{u}_P^{m} = \vec{u}_{insar} = u.\vec{s} \qquad (30)$$

and the same procedure that is used for the GPS data set (above) is applied with the computed $\vec{u}_P^{c}$, or, the computed displacement vectors are computed *along* the satellite line of sight, in which case Equation (31) is used:

$$u_P^{c} = \vec{u}.\vec{s} \qquad (31)$$

where "." is the dot product. The cost function is consequently given by Equation (32):

$$f_{insar}(\alpha_1, \alpha_2, \alpha_3) = \frac{1}{m}\sum_P(1 - \left(\frac{u_P^{c}}{u_P^{m}}\right)^2)^{1/2} \qquad (32)$$

Similar to the Equation (29), although not explicitly shown in Equation (32), the cost function $f_{insar}$ is dependent on both the optimization parameters $(\alpha_1, \alpha_2, \alpha_3)$ and the fault activity Boolean variables $(\beta_i)$.

Using a flattened horizon

Using the mean plane of a given seismic horizon (flattened horizon), the stress, fracture, and fault activity modeling engine 102 first computes (or calculates) the change in elevation for each point making the horizon. Then, the GPS cost function is used, for which the $u_z$ component is provided, giving Equation (33):

$$f_{horizon}(\alpha_1, \alpha_2, \alpha_3) = \frac{1}{m}\sum_P (1 - (\frac{u_P^c}{u_P^m})^2)^{1/2} \qquad (33)$$

Similar to the Equation (29), although not explicitly shown in Equation (33), the cost function $f_{horizon}$ is dependent on both the optimization parameters $(\alpha_1, \alpha_2, \alpha_3)$ and the fault activity Boolean variables $(\beta_i)$. If pre-folding or post-folding of the area is observed, the mean plane can no longer be used as a proxy. Therefore, a smooth and continuous fitting surface has to be constructed which remove the faulting deformations while keeping the folds. Then, the same procedure as for the mean plane is used to estimate the paleostress. In some circumstances and prior to defining the continuous fitting surface, a method may filter the input horizon from noises possessing high frequencies, such as corrugations and bumps, while preserving natural deformations.

Conclusion and perspectives

The example stress and fault activity modeling engine 102 applies the property of superposition that is inherent to linear elasticity to execute real-time computation of the perturbed stress and displacement field around a complexly faulted area, as well as the displacement discontinuity on faults that are active. Furthermore, the formulation executed by the example stress, fracture, and fault activity modeling engine 102 enables rapid paleostress inversion using multiple types of data such as fracture orientation, secondary fault planes, GPS, InSAR, fault throw, and fault slickenlines. Examples of the results 312 are described below. In one implementation, using fracture orientation and/or secondary fault planes from well bores, the stress, fracture, and fault activity modeling engine 102 recovers one or more tectonic events as well as fault activity, the recovered stress tensor being given by the orientation and ratio of the principal magnitudes. The example stress, fracture, and fault activity modeling engine 102 and associated methods can be applied across a broad range of applications, including stress interpolation in a complexly faulted reservoir, fractures prediction, quality control on interpreted faults, real-time computation of perturbed stress and displacement fields while doing interactive parameter estimation, fracture prediction, discernment of induced fracturing from preexisting fractures, and so forth.

In a variation, another application of the stress, fracture, and fault activity modeling engine 102 and associated methods is evaluation of the perturbed stress field (and therefore the tectonic event(s)) for recovering "shale gas." Since shale has low matrix permeability, gas production in commercial quantities may involve fractures to provide permeability. This may be done by hydraulic fracturing to create extensive artificial fractures around well bores, and therefore involves a good understanding of how fractures will propagate according to the perturbed stress field.

Example Methods

While the various blocks in these flowcharts are presented and described sequentially, one of ordinary skill will appreciate that some or all of the blocks may be executed in different orders, may be combined or omitted, and some or all of the blocks may be executed in parallel. Furthermore, the blocks may be performed actively or passively. For example, some blocks may be performed using polling or be interrupt driven in accordance with one or more embodiments. By way of an example, determination blocks may not involve a processor to process an instruction unless an interrupt is received to signify that condition exists in accordance with one or more embodiments. As another example, determination blocks may be performed by performing a test, such as checking a data value to test whether the value is consistent with the tested condition in accordance with one or more embodiments.

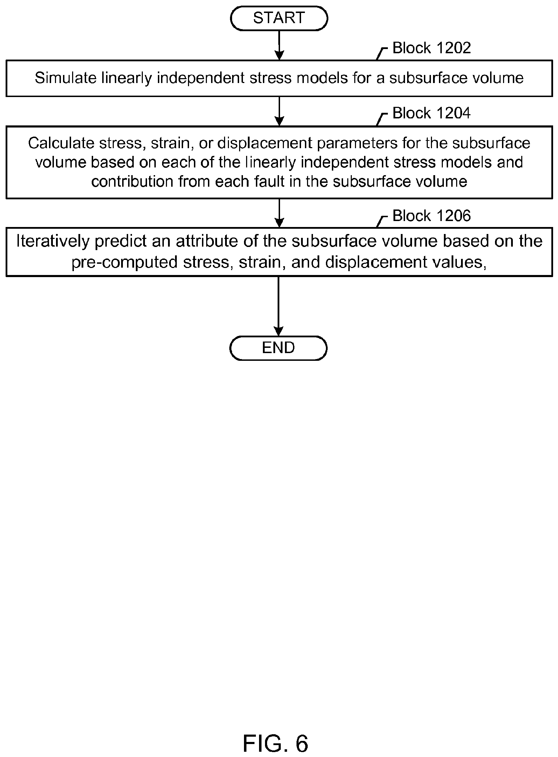

FIG. 6 shows an example method 1200 of stress, fracture, and fault activity modeling using the principle of superposition. In the flow diagram, the operations are summarized in individual blocks. The example method 1200 may be performed by hardware or combinations of hardware and software, for example, by the example stress, fracture, and fault activity modeling engine.

At block 1202, linearly independent stress models for a subsurface volume are simulated. In one or more embodiments, stress, strain, and/or displacement parameters for the subsurface volume are modeled based on a superposition of the linearly independent stress models. Accordingly, the linearly independent stress models are superpositioned according to corresponding optimization parameters for computing the stress, strain, and/or displacement values. Further, the stress, strain, and/or displacement parameters modeled by each of the linearly independent stress models are represented as a sum of contributions from individual faults in the subsurface volume. In one or more embodiments, each fault contribution is qualified (*i.e.,* enabled or disabled to represent active or inactive status) according to a corresponding fault activity Boolean variable for computing the stress, strain, and/or displacement values.

At block 1204, the stress, strain, and/or displacement values are pre-computed using each of linearly independent stress models based on a single individual fault contribution. For example, using three linearly independent stress models of a subsurface volume that has n faults, 3n sets of pre-computed stress, strain, and/or displacement values are generated and stored.

At block 1206, an attribute of the subsurface volume is iteratively predicted based on the pre-computed stress, strain, and/or displacement values. In one or more embodiments, the stress, strain, and/or displacement parameters are iteratively computed for a large number of random values assigned to the optimization parameters and fault activity Boolean variable by a Monte Carlo method to minimize a cost function. In one or more embodiments, the cost function represents a difference between a predicted attribute of the subsurface volume and a field measurement (*e.g.*, stored as observed data sets, such as the data sets 312 of FIG. 3 above) of the attribute of the subsurface volume as described in one or more of the Equations (22), (24), (26), (27), (29), (32), and (33).

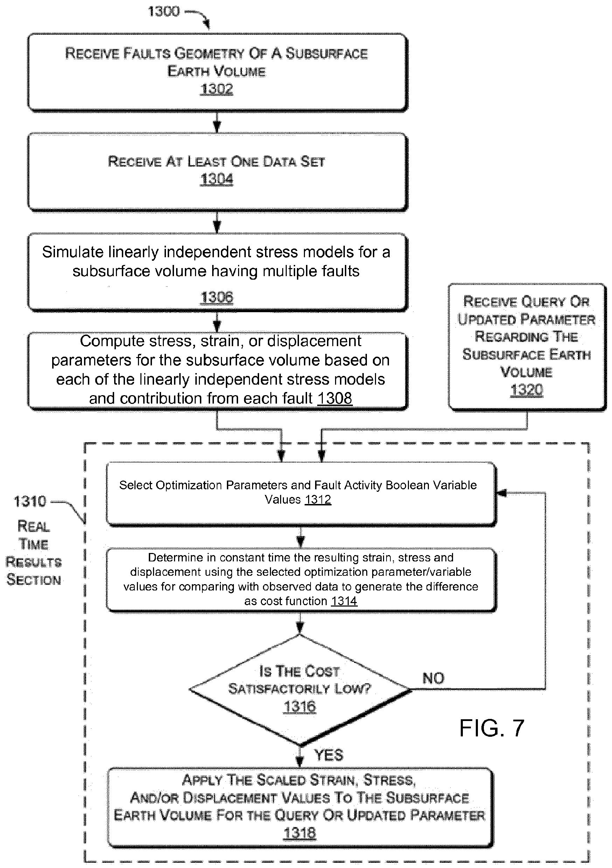

FIG. 7 shows an example method 1300 of stress, fracture, and fault activity modeling using the principle of superposition. In the flow diagram, the operations are summarized in individual blocks. The example method 1300 may be performed by hardware or combinations of hardware and software, for example, by the example stress, fracture, and fault activity modeling engine described above.

At block 1302, faults geometry for a subsurface earth volume is received Typically, multiple faults exist in the subsurface earth volume.

At block 1304, at least one data set associated with the subsurface earth volume is also received.

At block 1306, three linearly independent far field stress tensor models are simulated in constant time to generate strain, stress, and/or displacement values. In one or more embodiments, block 1306 is essentially the same as block 1202 shown in FIG. 6 above.

At block 1308, the stress, strain, and/or displacement values are pre-computed using each of linearly independent stress models based on a single individual fault contribution. In one or more embodiments, each of the linearly independent far field stress tensor models is decomposed as a sum of values corresponding to contributions from faults in the subsurface earth volume. In particular, the contribution from each fault may be activated or inactivated by assigning a corresponding binary value of the fault activity. Mathematically, the decomposition may be represented as shown in TABLE 1 above.

At block 1310, a post-process segment of the method commences, that can compute (or calculate) numerous real-time results based on the principle of superposition.

At block 1312, an optimization parameter for each of the three linearly independent far field stress tensor models and a fault activation binary value for each of the faults are selected.

At block 1314, a superposition of the three linearly independent far field stress tensor models is computed (or calculated) based on the selected optimization parameters for each of the three linearly independent far field stress tensor models and the selected fault activation binary values for each fault in the subsurface earth volume. Mathematically, the superposition may be represented as shown in TABLE 2 above.

At block 1316, a cost associated with the stress, strain, and/or displacement values from block 1314 is evaluated against observed data. Mathematically, the evaluation may be represented as shown in TABLE 3 above. If the cost is not satisfactory, then the method loops back to block 1312 to select new optimization parameters and new fault activation binary values. If the cost is satisfactory, then the method continues to block 1318.

At block 1318, the strain, stress, and/or displacement values from block 1314 are applied to the subsurface earth volume, e.g., with respect to a query about the subsurface earth volume or in response to an updated parameter about the subsurface earth volume.

Based on applying the strain, stress, and/or displacement values from block 1314 to the subsurface earth volume, a field operation of the well is performed in accordance with one or more embodiments of the technology. In one or more embodiments of the technology, performing the field operation may include sending a control signal to drilling and exploration equipment, well control injectors and valves (or other control devices in real-world control of a reservoir), transport and delivery network, surface facility, and so forth. The field operation may be used to gather hydrocarbons and other minerals from a subsurface formation.

At block 1320, a query or updated parameter regarding the subsurface earth volume is received, that seeds or initiates generation of the post-process results in the real-time results section (1310) of the method 1300.

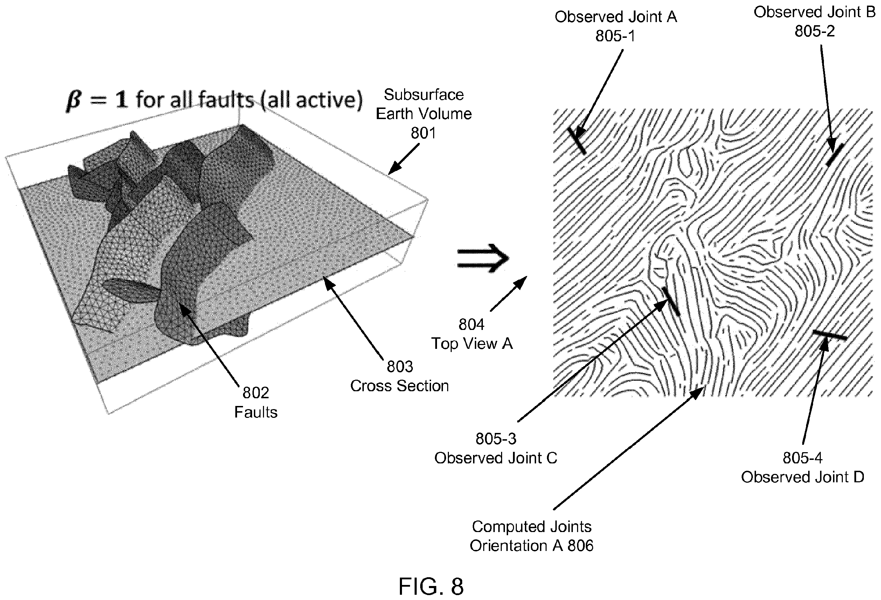

FIG. 8, FIG. 9, and FIG. 10 show an example of stress, fracture, and fault activity modeling. Specifically, FIG. 8 shows a perspective view of a subsurface earth volume 801 having multiple faults 802 represented as triangulated surfaces. For modeling purposes, the subsurface earth volume 801 is gridded into a number of observation points. Those observation points lying on the cross section 803 are shown as dots. Although not explicitly shown other than on the cross section 803, the observation points exist throughout the subsurface earth volume 801. As described above, stress, strain, and/or displacements values may be computed (or calculated) for each of these observation points.

Further as shown in FIG. 8, top view A 804 corresponds to the cross section 803 and represents computed joints orientation A 806 that is shown as fingerprint-like lines across the cross section 803. As described above, for opening fractures (*e.g.*, joints, veins, dikes) the orientation of the normal to the fracture plane indicates the direction of the least compressive stress direction (*i.e.*, $\sigma_3$). Specifically, the computed joints orientation A 806 is based on the stress field (*e.g.*, $\sigma_3$) computed using the method of superposition as described in reference to FIG. 6 and FIG. 7 above where contributions from all of the faults 802 are included. In particular, the computed joints orientation A 806 is an example of an intermediate result of the cost assessment engine (310) using the Monte Carlo method where a particular combination of optimization parameters $\alpha_i$. In other words, the cost assessment engine (310) generates this intermediate result by selecting the particular combination of optimization parameters $\alpha_i$ and selecting all of the faults (802) as active. Accordingly, the computed joints orientation A 806 corresponds to the particular combination of optimization parameters $\alpha_i$ and selecting the value "1" for all fault activity Boolean variables of the faults 802.

In addition, the top view A 804 is superimposed with bold segments representing observed joints orientations of the observed joint A (805-1), observed joint B (805-2), observed joint C (805-3), and observed joint D (805-4). The collection of these observed joints orientations is an example of the data sets 302 depicted in FIG. 3 above.

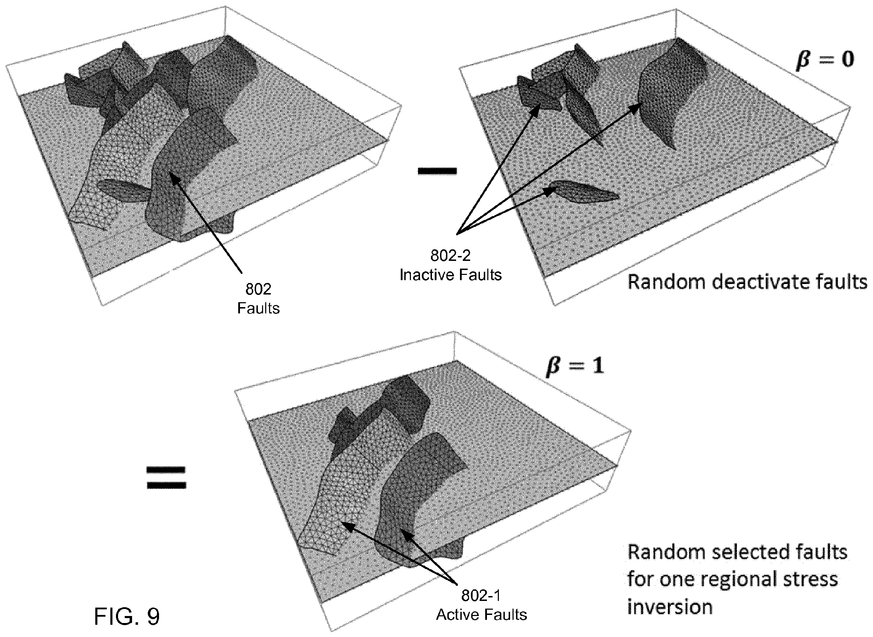

Comparison of the computed joints orientation A 806 and the bold segments representing observed joints orientations shows agreement between computed orientation and observed orientation for the observed joint B (805-2) and observed joint C (805-3). However, the computed orientation and observed orientation are grossly mis-matched for the observed joint A (805-1) and the observed joint D (805-4). Consistent with this visual comparison, the cost assessment engine 310 determines that selecting the value "1" for the fault status Boolean variables of all of the faults 802 does not result in lowest cost. Accordingly, the optimization parameters selector 308 selects a different fault status Boolean vector and possibly also a different combination of optimization parameters $\alpha_i$ according to the Monte Carlo method, as shown in FIG. 9 below.

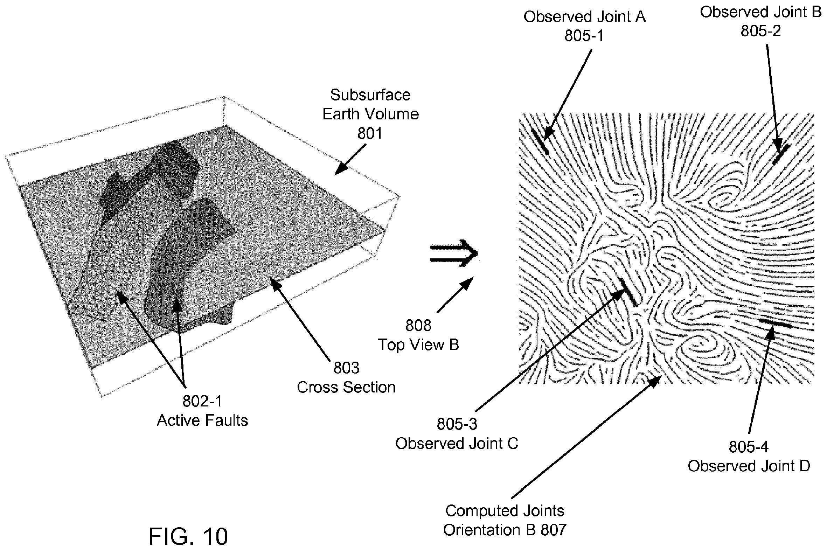

FIG. 9 shows a portion (referred to as the inactive faults 802-2) of the faults 802 are deactivated by selecting the value "0" for their fault status Boolean variables. Similarly, the remaining portion (referred to as the active faults 802-1) of the faults 802 are activated by selecting the value "1" for their fault status Boolean variables. The cost assessment engine 310 re-computes the joints orientations based on the revised selections of the fault activity Boolean variables to generate the computed joints orientation B 807 as shown in FIG. 10 below. Using the Monte Carlo method, the computed joints orientation B 807 not only corresponds to the revised selections of the fault activity Boolean variables but also possibly a different combination of optimization parameters $\alpha_i$.

FIG. 10 shows the top view B 808 corresponds to the cross section 803 and represents the computed joints orientation B 807 based on the active faults 802-1. Comparison of the computed joints orientation B 808 and the bold segments representing observed joints orientations shows agreement between computed orientation and observed orientation for all of observed joint A (805-1), observed joint B (805-2), observed joint C (805-3), and observed joint D (805-4). Consistent with this visual comparison, the cost assessment engine 310 determines that selecting the active faults 802-1 results in lowest cost. Accordingly, the particular selection of the active faults 802-1 and optimization parameters $\alpha_i$ is used in generating the results 312 depicted in FIG. 3 above.

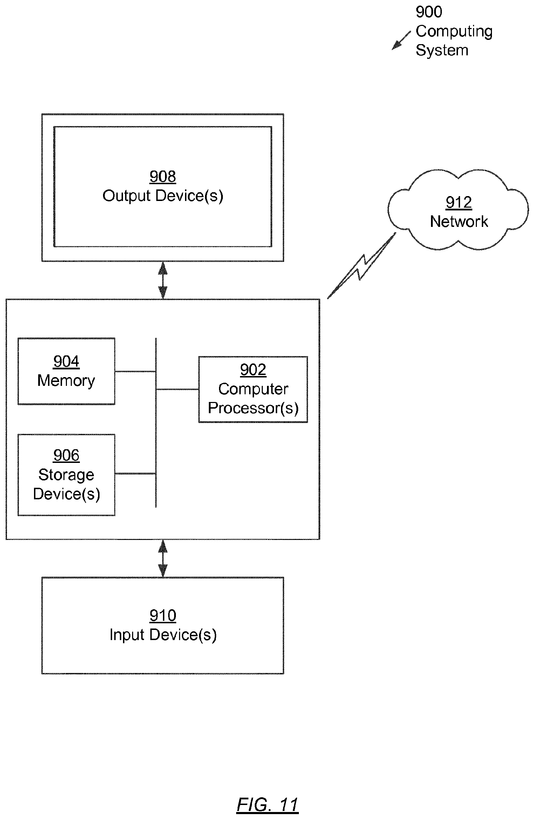

Embodiments of the technology may be implemented on a computing system. Any combination of mobile, desktop, server, embedded, or other types of hardware may be used. For example, as shown in FIG. 11, the computing system 900 may include one or more computer processor(s) 902, associated memory 904 (*e.g.,* random access memory (RAM), cache memory, flash memory, *etc.),* one or more storage device(s) 906 (*e.g.,* a hard disk, an optical drive such as a compact disk (CD) drive or digital versatile disk (DVD) drive, a flash memory stick, *etc.),* and numerous other elements and functionalities. The computer processor(s) 902 may be an integrated circuit for processing instructions. For example, the computer processor(s) may be one or more cores, or micro-cores of a processor. The computing system 900 may also include one or more input device(s) 910, such as a touchscreen, keyboard, mouse, microphone, touchpad, electronic pen, or any other type of input device. Further, the computing system 900 may include one or more output device(s) 908, such as a screen (*e.g.,* a liquid crystal display (LCD), a plasma display, touchscreen, cathode ray tube (CRT) monitor, projector, or other display device), a printer, external storage, or any other output device. One or more of the output device(s) may be the same or different from the input device(s). The computing system 900 may be connected to a network 912 (*e.g.,* a local area network (LAN), a wide area network (WAN) such as the Internet, mobile network, or any other type of network) via a network interface connection (not shown). The input and output device(s) may be locally or remotely (*e.g.*, via the network 912) connected to the computer processor(s) 902, memory 904, and storage device(s) 906. Many different types of computing systems exist, and the aforementioned input and output device(s) may take other forms.

Software instructions in the form of computer readable program code to perform embodiments of the technology may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that when executed by a processor(s), is configured to perform embodiments of the technology.

Further, one or more elements of the aforementioned computing system 900 may be located at a remote location and connected to the other elements over a network 912. Further, embodiments of the technology may be implemented on a distributed system having a plurality of nodes, where each portion of the technology may be located on a different node within the distributed system. In one embodiment of the technology, the node corresponds to a distinct computing device. The node may correspond to a computer processor with associated physical memory. The node may correspond to a computer processor or micro-core of a computer processor with shared memory and/or resources.

Conclusion

Although example systems and methods have been described in language specific to structural features and/or methodological acts, it is to be understood that the subject matter defined in the appended claims is not limited to the specific features or acts described. Rather, the specific features and acts are disclosed as example forms of implementing the claimed systems, methods, and structures.

Further, while the above description includes a limited number of embodiments, those skilled in the art, having benefit of this disclosure, will appreciate that other embodiments can be devised which do not depart from the scope of the claims.

Although only a few example embodiments have been described in detail above, those skilled in the art will readily appreciate that many modifications are possible in the example embodiments without materially departing from presenting stress domain. Accordingly, all such modifications are intended to be included within the scope of this disclosure as defined in the following claims.

**Claims**

1. A method for predicting fault activity of a subsurface volume, comprising:

obtaining, from the subsurface volume (202) and using a sensory device, a measurement of the subsurface volume (202);
obtaining a model of the subsurface volume (202) based on a plurality of linearly independent far field stress tensors;
identifying a plurality of faults in the subsurface volume; and
generating (1308) a plurality of pre-computed results for each of the plurality of linearly independent far field stress tensors, wherein each of the plurality of pre-computed results corresponds to sole contribution from one of the plurality of faults in the subsurface volume;
the method **characterized by**
selectively combining, for each of the plurality of linearly independent far field stress tensors and using a fault activity Boolean vector, the plurality of pre-computed results as a linearly independent contribution to a superpositioned result, wherein each linearly independent contribution is scaled in the superpositioned result by an optimization parameter associated with a corresponding one of the plurality of linearly independent far field stress tensors, and wherein the fault activity Boolean vector defines a selection of active faults of the plurality of faults and inactive faults of the plurality of faults;
calculating (1314) a cost function representing a difference between the superpositioned result and the measurement of the subsurface volume;
minimizing the cost function by iteratively adjusting the optimization parameter for each of the plurality of linearly independent far field stress tensors and iteratively adjusting the fault activity Boolean vector, wherein iteratively adjusting the fault activity Boolean vector iteratively changes the selection of active faults of the plurality of faults and inactive faults of the plurality of faults, and wherein iteratively adjusting the fault activity Boolean vector to minimize the cost function generates a prediction of the fault activity of the subsurface volume; and
controlling a field operation associated with the subsurface volume (202) based on the prediction.

2. The method of claim 1, wherein iteratively adjusting the optimization parameter for each of the plurality of linearly independent far field stress tensors to minimize the cost function generates a prediction of tectonic stress in the subsurface volume.

3. The method of claim 1, wherein minimizing the cost function comprises using a Monte Carlo method by assigning random values to the optimization parameter for each of the plurality of linearly independent far field stress tensors and the fault activity Boolean vector.

4. The method of claim 1, wherein the cost function is iteratively minimized for fitting a local perturbed stress field to a far field stress value in the subsurface volume (202) in real-time.

5. The method of claim 1, wherein the measurement of the subsurface volume (202) comprises at least one selected from a group consisting of seismic interpretation data, well bore data, and field observation data.

6. The method of claim 1, wherein the measurement of the subsurface volume (202) comprises at least one selected from a group consisting of fault geometry data, fracture orientation data, stylolites orientation data, secondary fault plane data, fault throw data, slickenline data, global positioning system, GPS, data, interferometric synthetic aperture radar, InSAR, data, laser ranging data, tilt-meter data, displacement data for a geologic fault, and stress magnitude data for the geologic fault.

7. The method of claim 2, further comprising:

generating, by iteratively adjusting the optimization parameter for each of the plurality of linearly independent far field stress tensors and iteratively adjusting the fault activity Boolean vector, a prediction of a stress attribute of the subsurface volume (202),
wherein the stress attribute comprises at least one selected from a group consisting of a stress inversion, a stress field, a far field stress value, a stress interpolation in a complex faulted reservoir, a perturbed stress field, a stress ratio and associated orientation, one or more tectonic events, a displacement discontinuity of a fault, a fault slip, an estimated displacement, a perturbed strain, a slip distribution on faults, quality control on interpreted faults, fracture prediction, prediction of fracture propagation according to perturbed stress field, real-time computation of perturbed stress and displacement fields while performing interactive parameters estimation, or discernment of an induced fracture from a preexisting fracture.

8. A system for predicting fault activity of a subsurface volume, comprising:

a sensory device configured to obtain a measurement of the subsurface volume (202);
a stress, fracture, and fault activity modeling engine (102) configured to:

obtain a model of the subsurface volume based (202) on a plurality of linearly independent far field stress tensors;
identify a plurality of faults in the subsurface volume; and
generate a plurality of pre-computed results for each of the plurality of linearly independent far field stress tensors, wherein each of the plurality of pre-computed results corresponds to sole contribution from one of the plurality of faults in the subsurface volume (202);
the system **characterized in that** the stress, fracture, and fault activity modeling engine (102) is configured to:
selectively combine, for each of the plurality of linearly independent far field stress tensors and using a fault activity Boolean vector, the plurality of pre-computed results as a linearly independent contribution to a superpositioned result, wherein each linearly independent contribution is scaled in the superpositioned result by an optimization parameter associated with a corresponding one of the plurality of linearly independent far field stress tensors, and wherein the fault activity Boolean vector defines a selection of active faults of the plurality of faults and inactive faults of the plurality of faults;
calculate a cost function representing a difference between the superpositioned result and the measurement of the subsurface volume (202); and
minimize the cost function by iteratively adjusting the optimization parameter for each of the plurality of linearly independent far field stress tensors and iteratively adjusting the fault activity Boolean vector, wherein iteratively adjusting the fault activity Boolean vector iteratively changes the selection of active faults of the plurality of faults and inactive faults of the plurality of faults, and wherein iteratively adjusting the fault activity Boolean vector to minimize the cost function generates a prediction of the fault activity of the subsurface volume (202); and

a control device configured to generate, based on the prediction of the fault activity, a control signal of a field operation of the subsurface volume (202).

9. The system of claim 8, wherein iteratively adjusting the optimization parameter for each of the plurality of linearly independent far field stress tensors to minimize the cost function generates a prediction of tectonic stress in the subsurface volume (202).

10. The system of claim 8, wherein minimizing the cost function comprises using a Monte Carlo method by assigning random values to the optimization parameter for each of the plurality of linearly independent far field stress tensors and the fault activity Boolean vector.

11. The system of claim 8, wherein the cost function is iteratively minimized for fitting a local perturbed stress field to a far field stress value in the subsurface volume (202) in real-time.

12. The system of claim 8, wherein the measurement of the subsurface volume (202) comprises at least one selected from a group consisting of seismic interpretation data, well bore data, and field observation data.

13. The system of claim 8, wherein the measurement of the subsurface volume (202) comprises at least one selected from a group consisting of fault geometry data, fracture orientation data, stylolites orientation data, secondary fault plane data, fault throw data, slickenline data, global positioning system, GPS, data, interferometric synthetic aperture radar, InSAR, data, laser ranging data, tilt-meter data, displacement data for a geologic fault, and stress magnitude data for the geologic fault.

14. The system of claim 9, further comprising:

generating, by iteratively adjusting the optimization parameter for each of the plurality of linearly independent far field stress tensors and iteratively adjusting the fault activity Boolean vector, a prediction of a stress attribute of the subsurface volume (202),
wherein the stress attribute comprises at least one selected from a group consisting of a stress inversion, a stress field, a far field stress value, a stress interpolation in a complex faulted reservoir, a perturbed stress field, a stress ratio and associated orientation, one or more tectonic events, a displacement discontinuity of a fault, a fault slip, an estimated displacement, a perturbed strain, a slip distribution on faults, quality control on interpreted faults, fracture prediction, prediction of fracture propagation according to perturbed stress field, real-time computation of perturbed stress and displacement fields while performing interactive parameters estimation, or discernment of an induced fracture from a preexisting fracture.

15. A non-transitory computer readable medium storing instructions for predicting fault activity of a subsurface volume, the instructions, when executed by a computer processor (200), comprising functionality for:

obtaining, from the subsurface volume (202) and using a sensor, a measurement of the subsurface volume;
obtaining a model of the subsurface volume (202) based on a plurality of linearly independent far field stress tensors;
identifying a plurality of faults in the subsurface volume (202); and
generating a plurality of pre-computed results for each of the plurality of linearly independent far field stress tensors, wherein each of the plurality of pre-computed results corresponds to sole contribution from one of the plurality of faults in the subsurface volume (202);
**characterized by**:

selectively combining, for each of the plurality of linearly independent far field stress tensors and using a fault activity Boolean vector, the plurality of pre-computed results as a linearly independent contribution to a superpositioned result, wherein each linearly independent contribution is scaled in the superpositioned result by an optimization parameter associated with a corresponding one of the plurality of linearly independent far field stress tensors, and wherein the fault activity Boolean vector defines a selection of active faults of the plurality of faults and inactive faults of the plurality of faults;
calculating a cost function representing a difference between the superpositioned result and the measurement of the subsurface volume (202);
minimizing the cost function by iteratively adjusting the optimization parameter for each of the plurality of linearly independent far field stress tensors and iteratively adjusting the fault activity Boolean vector, wherein iteratively adjusting the fault activity Boolean vector iteratively changes the selection of active faults of the plurality of faults and inactive faults of the plurality of faults, and wherein iteratively adjusting the fault activity Boolean vector to minimize the cost function generates a prediction of the fault activity of the subsurface volume (202); and

controlling a field operation associated with the subsurface volume (202) based on the prediction.

**Patentansprüche**

1. Verfahren zum Vorhersagen einer Störungsaktivität eines Untergrundvolumens, umfassend:

   Erhalten einer Messung des Untergrundvolumens (202) aus dem Untergrundvolumen (202) und unter Verwendung einer sensorischen Vorrichtung;
   Erhalten eines Modells des Untergrundvolumens (202) basierend auf mehreren linear unabhängigen Fernfeldspannungstensoren;
   Identifizieren mehrerer Störungen im Untergrundvolumen; und
   Erzeugen (1308) mehrerer vorausberechneter Ergebnisse für jeden der mehreren linear unabhängigen Fernfeldspannungstensoren, wobei jedes der mehreren vorausberechneten Ergebnisse einem alleinigen Beitrag aus einer der mehreren Störungen im Untergrundvolumen entspricht;
   wobei das Verfahren **gekennzeichnet ist durch**
   selektives Kombinieren der mehreren vorausberechneten Ergebnisse als linear unabhängigen Beitrag zu einem überlagerten Ergebnis für jeden der mehreren linear unabhängigen Fernfeldspannungstensoren und unter Verwendung eines Booleschen Störungsaktivitätsvektors, wobei jeder linear unabhängige Beitrag im überlagerten Ergebnis mit einem einem entsprechenden der mehreren linear unabhängigen Fernfeldspannungstensoren zugeordneten Optimierungsparameter skaliert wird, und wobei der Boolesche Störungsaktivitätsvektor eine Auswahl aktiver Störungen der mehreren Störungen und inaktiver Störungen der mehreren Störungen definiert;
   Berechnen (1314) einer Kostenfunktion, die eine Differenz zwischen dem überlagerten Ergebnis und der Messung des Untergrundvolumens darstellt;
   Minimieren der Kostenfunktion durch iteratives Anpassen des Optimierungsparameters für jeden der mehreren linear unabhängigen Fernfeldspannungstensoren und iteratives Anpassen des Booleschen Störungsaktivitätsvektors, wobei das iterative Anpassen des Booleschen Störungsaktivitätsvektors iterativ die Auswahl aktiver Störungen der mehreren Störungen und inaktiver Störungen der mehreren Störungen ändert, und wobei das iterative Anpassen des Booleschen Störungsaktivitätsvektors zur Minimierung der Kostenfunktion eine Vorhersage der Störungsaktivität des Untergrundvolumens erzeugt; und
   Steuern eines dem Untergrundvolumen (202) zugeordneten Feldeinsatz-Vorgangs basierend auf der Vorhersage.

2. Verfahren nach Anspruch 1, wobei das iterative Anpassen des Optimierungsparameters für jeden der mehreren linear unabhängigen Fernfeldspannungstensoren zur Minimierung der Kostenfunktion eine Vorhersage einer tektonischen Spannung im Untergrundvolumen erzeugt.

3. Verfahren nach Anspruch 1, wobei das Minimieren der Kostenfunktion ein Verwenden eines Monte-Carlo-Verfahrens umfasst, indem dem Optimierungsparameter für jeden der mehreren linear unabhängigen Fernfeldspannungstensoren und dem Booleschen Störungsaktivitätsvektor Zufallswerte zugewiesen werden.

4. Verfahren nach Anspruch 1, wobei die Kostenfunktion zum Fitten eines örtlich gestörten Spannungsfelds an einen Fernfeldspannungswert im Untergrundvolumen (202) in Echtzeit iterativ minimiert wird.

5. Verfahren nach Anspruch 1, wobei die Messung des Untergrundvolumens (202) wenigstens eines ausgewählt aus einer Gruppe bestehend aus seismischen Interpretationsdaten, Bohrlochdaten und Feldobservationsdaten umfasst.

6. Verfahren nach Anspruch 1, wobei die Messung des Untergrundvolumens (202) wenigstens eines ausgewählt aus einer Gruppe bestehend aus Störungsgeometriedaten, Rissorientierungsdaten, Stylolytenorientierungsdaten, Begleitverwerfungsflächendaten, Sprunghöhendaten, Harnischdaten, GPS-(Global-Positioning-System-)Daten, InSAR-(Interferometric-Synthetic-Aperture-Radar-)Daten, Laserentfernungsmessungsdaten, Tiltmeterdaten, Dislokationsdaten für eine geologische Störung und Spannungsintensitätsdaten für die geologische Störung umfasst.

7. Verfahren nach Anspruch 2, das ferner umfasst:

Erzeugen einer Vorhersage eines Spannungsattributs des Untergrundvolumens (202) durch iteratives Anpassen des Optimierungsparameters für jeden der mehreren linear unabhängigen Fernfeldspannungstensoren und iteratives Anpassen des Booleschen Störungsaktivitätsvektors,

wobei das Spannungsattribut wenigstens eines umfasst ausgewählt aus einer Gruppe bestehend aus einer Spannungsinversion, einem Spannungsfeld, einem Fernfeldspannungswert, einer Spannungsinterpolation in einer komplex verworfenen Lagerstätte, einem gestörten Spannungsfeld, einem Spannungsverhältnis und der diesem zugeordneten Orientierung, einem oder mehreren tektonischen Ereignissen, einer Dislokationsdiskontinuität einer Störung, einem Störungsverschiebungsbetrag, einer geschätzten Dislokation, einer gestörten Dehnung, einer Verschiebungsverteilung an Störungen, einer Qualitätskontrolle von interpretierten Störungen, einer Rissvorhersage, einer Vorhersage von Rissausbreitung gemäß gestörtem Spannungsfeld, einer Echtzeitberechnung gestörter Spannungs- und Dislokationsfelder während der Durchführung einer Interaktive-Parameter-Schätzung, oder einem Unterscheiden eines induzierten Risses von einem natürlichen Riss.

8. System zum Vorhersagen einer Störungsaktivität eines Untergrundvolumens, umfassend:

eine zum Erhalten einer Messung des Untergrundvolumens (202) ausgelegte sensorische Vorrichtung;
eine Spannungs-, Riss- und Störungsaktivitätsmodellierungs-Engine (102), ausgelegt zum:

Erhalten eines Modells des Untergrundvolumens (202) basierend auf mehreren linear unabhängigen Fernfeldspannungstensoren;
Identifizieren mehrerer Störungen im Untergrundvolumen; und
Erzeugen mehrerer vorausberechneter Ergebnisse für jeden der mehreren linear unabhängigen Fernfeldspannungstensoren, wobei jedes der mehreren vorausberechneten Ergebnisse einem alleinigen Beitrag aus einer der mehreren Störungen im Untergrundvolumen (202) entspricht;

wobei das System **dadurch gekennzeichnet ist, dass** die Spannungs-, Riss- und Störungsaktivitätsmodellierungs-Engine (102) ausgelegt ist zum:

selektiven Kombinieren der mehreren vorausberechneten Ergebnisse als linear unabhängigen Beitrag zu einem überlagerten Ergebnis für jeden der mehreren linear unabhängigen Fernfeldspannungstensoren und unter Verwendung eines Booleschen Störungsaktivitätsvektors, wobei jeder linear unabhängige Beitrag im überlagerten Ergebnis mit einem einem entsprechenden der mehreren linear unabhängigen Fernfeldspannungstensoren zugeordneten Optimierungsparameter skaliert wird,
und wobei der Boolesche Störungsaktivitätsvektor eine Auswahl aktiver Störungen der mehreren Störungen und inaktiver Störungen der mehreren Störungen definiert;
Berechnen einer Kostenfunktion, die eine Differenz zwischen dem überlagerten Ergebnis und der Messung des Untergrundvolumens (202) darstellt; und
Minimieren der Kostenfunktion durch iteratives Anpassen des Optimierungsparameters für jeden der mehreren linear unabhängigen Fernfeldspannungstensoren und iteratives Anpassen des Booleschen Störungsaktivitätsvektors, wobei das iterative Anpassen des Booleschen Störungsaktivitätsvektors iterativ die Auswahl aktiver Störungen der mehreren Störungen und inaktiver Störungen der mehreren Störungen ändert, und wobei das iterative Anpassen des Booleschen Störungsaktivitätsvektors zur Minimierung der Kostenfunktion eine Vorhersage der Störungsaktivität des Untergrundvolumens (202) erzeugt; und

eine Steuereinrichtung, ausgelegt zum Erzeugen eines Steuersignals eines Feldeinsatz-Vorgangs im Untergrundvolumen (202) basierend auf der Vorhersage der Störungsaktivität.

9. System nach Anspruch 8, wobei das iterative Anpassen des Optimierungsparameters für jeden der mehreren linear unabhängigen Fernfeldspannungstensoren zur Minimierung der Kostenfunktion eine Vorhersage einer tektonischen Spannung im Untergrundvolumen (202) erzeugt.

10. System nach Anspruch 8, wobei das Minimieren der Kostenfunktion ein Verwenden eines Monte-Carlo-Verfahrens umfasst, indem dem Optimierungsparameter für jeden der mehreren linear unabhängigen Fernfeldspannungstensoren und dem Booleschen Störungsaktivitätsvektor Zufallswerte zugewiesen werden.

11. System nach Anspruch 8, wobei die Kostenfunktion zum Fitten eines örtlich gestörten Spannungsfelds an einen Fernfeldspannungswert im Untergrundvolumen (202) in Echtzeit iterativ minimiert wird.

**12.** System nach Anspruch 8, wobei die Messung des Untergrundvolumens (202) wenigstens eines ausgewählt aus einer Gruppe bestehend aus seismischen Interpretationsdaten, Bohrlochdaten und Feldobservationsdaten umfasst.

**13.** System nach Anspruch 8, wobei die Messung des Untergrundvolumens (202) wenigstens eines ausgewählt aus einer Gruppe bestehend aus Störungsgeometriedaten, Rissorientierungsdaten, Stylolytenorientierungsdaten, Begleitverwerfungsflächendaten, Sprunghöhendaten, Harnischdaten, GPS-(Global-Positioning-System-)Daten, In-SAR-(Interferometric-Synthetic-Aperture-Radar-)Daten, Laserentfernungsmessungsdaten, Tiltmeterdaten, Dislokationsdaten für eine geologische Störung und Spannungsintensitätsdaten für die geologische Störung umfasst.

**14.** System nach Anspruch 9, das ferner umfasst:

Erzeugen einer Vorhersage eines Spannungsattributs des Untergrundvolumens (202) durch iteratives Anpassen des Optimierungsparameters für jeden der mehreren linear unabhängigen Fernfeldspannungstensoren und iteratives Anpassen des Booleschen Störungsaktivitätsvektors,
wobei das Spannungsattribut wenigstens eines umfasst ausgewählt aus einer Gruppe bestehend aus einer Spannungsinversion, einem Spannungsfeld, einem Fernfeldspannungswert, einer Spannungsinterpolation in einer komplex verworfenen Lagerstätte, einem gestörten Spannungsfeld, einem Spannungsverhältnis und der diesem zugeordneten Orientierung, einem oder mehreren tektonischen Ereignissen, einer Dislokationsdiskontinuität einer Störung, einem Störungsverschiebungsbetrag, einer geschätzten Dislokation, einer gestörten Dehnung, einer Verschiebungsverteilung an Störungen, einer Qualitätskontrolle von interpretierten Störungen, einer Rissvorhersage, einer Vorhersage von Rissausbreitung gemäß gestörtem Spannungsfeld, einer Echtzeitberechnung gestörter Spannungs- und Dislokationsfelder während der Durchführung einer Interaktive-Parameter-Schätzung, oder einem Unterscheiden eines induzierten Risses von einem natürlichen Riss.

**15.** Nichtflüchtiges rechnerlesbares Medium, das Anweisungen zum Vorhersagen einer Störungsaktivität eines Untergrundvolumens speichert, wobei die Anweisungen bei deren Ausführung durch einen Rechnerprozessor (200) eine Funktionalität umfassen zum:

Erhalten einer Messung des Untergrundvolumens aus dem Untergrundvolumen (202) und unter Verwendung eines Sensors;
Erhalten eines Modells des Untergrundvolumens (202) basierend auf mehreren linear unabhängigen Fernfeldspannungstensoren;
Identifizieren mehrerer Störungen im Untergrundvolumen (202); und
Erzeugen mehrerer vorausberechneter Ergebnisse für jeden der mehreren linear unabhängigen Fernfeldspannungstensoren, wobei jedes der mehreren vorausberechneten Ergebnisse einem alleinigen Beitrag aus einer der mehreren Störungen im Untergrundvolumen (202) entspricht;
**gekennzeichnet durch**:

selektives Kombinieren der mehreren vorausberechneten Ergebnisse als linear unabhängigen Beitrag zu einem überlagerten Ergebnis für jeden der mehreren linear unabhängigen Fernfeldspannungstensoren und unter Verwendung eines Booleschen Störungsaktivitätsvektors, wobei jeder linear unabhängige Beitrag im überlagerten Ergebnis mit einem einem entsprechenden der mehreren linear unabhängigen Fernfeldspannungstensoren zugeordneten Optimierungsparameter skaliert wird, und wobei der Boolesche Störungsaktivitätsvektor eine Auswahl aktiver Störungen der mehreren Störungen und inaktiver Störungen der mehreren Störungen definiert;
Berechnen einer Kostenfunktion, die eine Differenz zwischen dem überlagerten Ergebnis und der Messung des Untergrundvolumens (202) darstellt;
Minimieren der Kostenfunktion durch iteratives Anpassen des Optimierungsparameters für jeden der mehreren linear unabhängigen Fernfeldspannungstensoren und iteratives Anpassen des Booleschen Störungsaktivitätsvektors, wobei das iterative Anpassen des Booleschen Störungsaktivitätsvektors iterativ die Auswahl aktiver Störungen der mehreren Störungen und inaktiver Störungen der mehreren Störungen ändert, und wobei das iterative Anpassen des Booleschen Störungsaktivitätsvektors zur Minimierung der Kostenfunktion eine Vorhersage der Störungsaktivität des Untergrundvolumens (202) erzeugt; und
Steuern eines dem Untergrundvolumen (202) zugeordneten Feldeinsatz-Vorgangs basierend auf der Vorhersage.

**Revendications**

1. Procédé destiné à prédire l'activité de failles d'un volume souterrain, comprenant :

   l'obtention, à partir du volume souterrain (202) et à l'aide d'un dispositif sensoriel, d'une mesure du volume souterrain (202) ;
   l'obtention d'un modèle du volume souterrain (202) basé sur une pluralité de tenseurs de contrainte de champ lointain indépendants linéairement ;
   l'identification d'une pluralité de failles dans le volume souterrain ; et
   la génération (1308) d'une pluralité de résultats précalculés pour chacun de la pluralité de tenseurs de contrainte de champ lointain indépendants linéairement, dans lequel chacune de la pluralité de résultats précalculés correspond à la seule contribution à partir de l'une de la pluralité de failles dans le volume souterrain ;
   le procédé **caractérisé par**
   la combinaison de manière sélective, pour chacun de la pluralité de tenseurs de contrainte de champ lointain indépendants linéairement et à l'aide d'un vecteur booléen d'activité de failles, de la pluralité de résultats précalculés comme contribution indépendante linéairement à un résultat superpositionné, dans lequel chaque contribution indépendante linéairement est mise à l'échelle dans le résultat superpositionné par un paramètre d'optimisation associé à un paramètre correspondant de la pluralité de tenseurs de contrainte de champ lointain indépendants linéairement, et dans lequel le vecteur booléen d'activité de failles définit une sélection de failles actives de la pluralité de failles et des failles inactives de la pluralité de failles ;
   le calcul (1314) d'une fonction de coût représentant une différence entre le résultat superpositionné et la mesure du volume souterrain ;
   la réduction au minimum de la fonction de coût en réglant de manière itérative le paramètre d'optimisation pour chacun de la pluralité de tenseurs de contrainte de champ lointain indépendants linéairement et en réglant de manière itérative le vecteur booléen d'activité de failles, dans lequel le réglage de manière itérative du vecteur booléen d'activité de failles modifie de manière itérative la sélection des failles actives de la pluralité de failles et des failles inactives de la pluralité de failles et dans lequel le réglage de manière itérative du vecteur booléen d'activité de failles pour réduire au minimum la fonction de coût génère une prédiction de l'activité de failles du volume souterrain ; et la commande d'une exploitation du champ associé au volume souterrain (202) basé sur la prédiction.

2. Procédé selon la revendication 1, dans lequel le réglage de manière itérative du paramètre d'optimisation pour chacun de la pluralité de tenseurs de contrainte de champ lointain indépendants linéairement pour réduire au minimum la fonction de coût génère une prédiction de la contrainte tectonique dans le volume souterrain.

3. Procédé selon la revendication 1, dans lequel la réduction de la fonction de coût comprend l'utilisation d'une méthode de Monte-Carlo en attribuant des valeurs aléatoires au paramètre d'optimisation pour chacun de la pluralité de tenseurs de contrainte de champ lointain indépendants linéairement et au vecteur booléen d'activité de failles.

4. Procédé selon la revendication 1, dans lequel la fonction de coût est réduite au minimum de manière itérative pour l'ajustement d'un champ de contrainte perturbée locale à une valeur de contrainte de champ lointain dans le volume souterrain (202) en temps réel.

5. Procédé selon la revendication 1, dans lequel la mesure du volume souterrain (202) comprend au moins une sélectionnée dans un groupe choisi constitué de données d'interprétation sismique, de données de trou de forage et de données d'observation du champ.

6. Procédé selon la revendication 1, dans lequel la mesure du volume souterrain (202) comprend au moins une sélectionnée dans un groupe constitué de données de géométrie de faille, de données d'orientation de fracture, de données d'orientation des stylolites, de données de plan de défaillance secondaire, de données de rejet de failles, de données de ligne de repère, de système de positionnement global, de données GPS, de radar d'ouverture synthétique interférométrique, InSAR, de données de portée laser, de données d'inclinaison, de données de déplacement pour une faille géologique et de données de grandeur de contrainte pour la faille géologique.

7. Procédé selon la revendication 2, comprenant en outre :

   la génération, en réglant de manière itérative le paramètre d'optimisation pour chacun de la pluralité de tenseurs de contrainte de champ lointain indépendants linéairement et en réglant de manière itérative le vecteur booléen d'activité de failles, une prédiction d'un attribut de contrainte du volume souterrain (202),
dans lequel l'attribut de contrainte comprend au moins un élément sélectionné dans un groupe constitué d'une inversion de contrainte, d'un champ de contrainte, d'une valeur de contrainte de champ lointain, d'une interpolation de contrainte dans un réservoir avec faille complexe, d'un champ de contrainte perturbée, d'un rapport de contrainte et d'une orientation associée, d'un ou plusieurs événements tectoniques, d'une discontinuité de déplacement d'une faille, d'un glissement de faille, d'un déplacement estimé, d'une contrainte perturbée, d'une distribution de glissement sur les failles, d'un contrôle qualité sur les failles interprétées, d'une prédiction de fracture, d'une prédiction de propagation de fracture selon le champ de contrainte perturbée, d'un calcul en temps réel des champs de contrainte et de déplacement perturbés tout en effectuant l'estimation interactive des paramètres, ou le discernement d'une fracture induite à partir d'une fracture préexistante.

8. Système destiné à prédire l'activité de failles d'un volume souterrain, comprenant :

un dispositif sensoriel conçu pour obtenir une mesure du volume souterrain (202) ;
un moteur de modélisation de contrainte, de fracture et d'activité de failles (102) conçu pour :

obtenir un modèle du volume souterrain basé (202) sur une pluralité de tenseurs de contrainte de champ lointain indépendants linéairement ;
identifier une pluralité de failles dans le volume souterrain ; et
générer une pluralité de résultats précalculés pour chacun de la pluralité de tenseurs de contrainte de champ lointain indépendants linéairement, dans lequel chacune de la pluralité de résultats précalculés correspond à la seule contribution à partir de l'une de la pluralité de failles dans le volume souterrain (202) ;
le système **caractérisé en ce que** le moteur de modélisation de contrainte, de fracture et de l'activité de failles (102) est conçu pour :
combiner de manière sélective, pour chacun de la pluralité de tenseurs de contrainte de champ lointain indépendants linéairement et à l'aide d'un vecteur booléen d'activité de failles, de la pluralité de résultats précalculés comme contribution indépendante linéairement à un résultat superpositionné, dans lequel chaque contribution indépendante linéairement est mise à l'échelle dans le résultat superpositionné par un paramètre d'optimisation associé à un paramètre correspondant de la pluralité de tenseurs de contrainte de champ lointain indépendants linéairement, et dans lequel le vecteur booléen d'activité de failles définit une sélection de failles actives de la pluralité de failles et des failles inactives de la pluralité de failles ;
calculer une fonction de coût représentant une différence entre le résultat superpositionné et la mesure du volume souterrain (202) ;
réduire au minimum la fonction de coût en réglant de manière itérative le paramètre d'optimisation pour chacun de la pluralité de tenseurs de contrainte de champ lointain indépendants linéairement et en réglant de manière itérative le vecteur booléen d'activité de failles, dans lequel le réglage de manière itérative du vecteur booléen d'activité de failles faute modifie de manière itérative la sélection des failles actives de la pluralité de failles et des failles inactives de la pluralité de failles et dans lequel le réglage de manière itérative du vecteur booléen d'activité de failles pour réduire au minimum la fonction de coût génère une prédiction de l'activité de failles du volume souterrain (202) ; et

un dispositif de commande conçu pour générer, basé sur la prédiction de l'activité de failles, un signal de commande d'une exploitation du champ du volume souterrain (202).

9. Système selon la revendication 8, dans lequel le réglage de manière itérative du paramètre d'optimisation pour chacun de la pluralité de tenseurs de contrainte de champ lointain indépendants linéairement pour réduire au minimum la fonction de coût génère une prédiction de la contrainte tectonique dans le volume souterrain (202).

10. Système selon la revendication 8, dans lequel la réduction de la fonction de coût comprend l'utilisation d'une méthode de Monte-Carlo en attribuant des valeurs aléatoires au paramètre d'optimisation pour chacun de la pluralité de tenseurs de contrainte de champ lointain indépendants linéairement et au vecteur booléen d'activité de failles.

11. Système selon la revendication 8, dans lequel la fonction de coût est réduite au minimum de manière itérative pour l'ajustement d'un champ de contrainte perturbée locale à une valeur de contrainte de champ lointain dans le volume souterrain (202) en temps réel.

12. Système selon la revendication 8, dans lequel la mesure du volume souterrain (202) comprend au moins une sélectionnée dans un groupe choisi constitué de données d'interprétation sismique, de données de trou de forage et de données d'observation du champ.

13. Système selon la revendication 8, dans lequel la mesure du volume souterrain (202) comprend au moins une sélectionnée dans un groupe constitué de données de géométrie de faille, de données d'orientation de fracture, de données d'orientation des stylolites, de données de plan de défaillance secondaire, de données de rejet de failles, de données de ligne de repère, de système de positionnement global, de données GPS, de radar d'ouverture synthétique interférométrique, InSAR, de données de portée laser, de données d'inclinaison, de données de déplacement pour une faille géologique et de données de grandeur de contrainte pour la faille géologique.

14. Système selon la revendication 9, comprenant en outre :

la génération, en réglant de manière itérative le paramètre d'optimisation pour chacun de la pluralité de tenseurs de contrainte de champ lointain indépendants linéairement et en réglant de manière itérative le vecteur booléen d'activité de failles, une prédiction d'un attribut de contrainte du volume souterrain (202),
dans lequel l'attribut de contrainte comprend au moins un élément sélectionné dans un groupe constitué d'une inversion de contrainte, d'un champ de contrainte, d'une valeur de contrainte de champ lointain, d'une interpolation de contrainte dans un réservoir avec faille complexe, d'un champ de contrainte perturbée, d'un rapport de contrainte et d'une orientation associée, d'un ou plusieurs événements tectoniques, d'une discontinuité de déplacement d'une faille, d'un glissement de faille, d'un déplacement estimé, d'une contrainte perturbée, d'une distribution de glissement sur les failles, d'un contrôle qualité sur les failles interprétées, d'une prédiction de fracture, d'une prédiction de propagation de fracture selon le champ de contrainte perturbée, d'un calcul en temps réel des champs de contrainte et de déplacement perturbés tout en effectuant l'estimation interactive des paramètres, ou le discernement d'une fracture induite à partir d'une fracture préexistante.

15. Support lisible par ordinateur non transitoire mémorisant des instructions destinées à prédire l'activité de failles d'un volume souterrain, les instructions, lorsqu'elles sont exécutées par un processeur d'ordinateur (200), comprenant des fonctionnalités destinées :

à obtenir, à partir du volume souterrain (202) et à l'aide d'un capteur, une mesure du volume souterrain ;
à obtenir un modèle du volume souterrain (202) basé sur une pluralité de tenseurs de contrainte de champ lointain indépendants linéairement ;
à identifier une pluralité de failles dans le volume souterrain (202) ; et
à générer une pluralité de résultats précalculés pour chacun de la pluralité de tenseurs de contrainte de champ lointain indépendants linéairement, dans lequel chacune de la pluralité de résultats précalculés correspond à la seule contribution à partir de l'une de la pluralité de failles dans le volume souterrain (202) ;
**caractérisé par** :

la combinaison de manière sélective, pour chacun de la pluralité de tenseurs de contrainte de champ lointain indépendants linéairement et à l'aide d'un vecteur booléen d'activité de failles, de la pluralité de résultats précalculés comme contribution indépendante linéairement à un résultat superpositionné, dans lequel chaque contribution indépendante linéairement est mise à l'échelle dans le résultat superpositionné par un paramètre d'optimisation associé à un paramètre correspondant de la pluralité de tenseurs de contrainte de champ lointain indépendants linéairement, et dans lequel le vecteur booléen d'activité de failles définit une sélection de failles actives de la pluralité de failles et des failles inactives de la pluralité de failles ;
le calcul d'une fonction de coût représentant une différence entre le résultat superpositionné et la mesure du volume souterrain (202) ;
la réduction au minimum de la fonction de coût en réglant de manière itérative le paramètre d'optimisation pour chacun de la pluralité de tenseurs de contrainte de champ lointain indépendants linéairement et en réglant de manière itérative le vecteur booléen d'activité de failles, dans lequel le réglage de manière itérative du vecteur booléen d'activité de failles faute modifie de manière itérative la sélection des failles actives de la pluralité de failles et des failles inactives de la pluralité de failles et dans lequel le réglage de manière itérative du vecteur booléen d'activité de failles pour réduire au minimum la fonction de coût génère une prédiction de l'activité de failles du volume souterrain (202) ; et
la commande d'une exploitation du champ associé au volume souterrain (202) basée sur la prédiction.

FIG. 1

100

(FREE-SURFACE)

INPUT FROM WELL BORES:

- FRACTURE ORIENTATION
- SECONDARY FAULT PLANES
- GPS AND TILTMETERS

INPUT FOR FAULTS:

- FAULTS GEOMETRY
- OPTIONAL THROW
- OPTIONAL CONSTRAINTS

INPUT:
- DEFORMED HORIZONS

Stress, Fracture, and Fault Activity Modeling Engine
102

$\sigma_3$

$\sigma_2$

$\sigma_1$

OUTPUT:
- DISPLACEMENT ON FAULTS
- Fault Activity for each Fault
- FAR FIELD STRESS(ES)
- TECTONIC REGIME(S)

EP 2 975 437 B1

FIG. 2

29

STRESS, FRACTURE, AND FAULT ACTIVITY MODELING ENGINE 102

DATA SETS 302

INITIALIZATION ENGINE 304

STRESS MODEL SIMULATORS 306

OPTIMIZATION PARAMETERS SELECTOR 308

SELECT $\alpha$ AND $\beta_j$

$O(p)$

COST ASSESSMENT ENGINE 310

$b$, $u$, $\varepsilon$, $\sigma$

YES

No

RESULTS 312

FIG. 3

30

FIG. 4

FIG. 5

```
                    ┌─────────────┐
                    │    START    │
                    └──────┬──────┘
                           │        ┌ Block 1202
                           ▼
┌──────────────────────────────────────────────────────────┐
│  Simulate linearly independent stress models for a subsurface volume  │
└──────────────────────────────────────────────────────────┘
                           │        ┌ Block 1204
                           ▼
┌──────────────────────────────────────────────────────────┐
│  Calculate stress, strain, or displacement parameters for the subsurface  │
│  volume based on each of the linearly independent stress models and  │
│  contribution from each fault in the subsurface volume  │
└──────────────────────────────────────────────────────────┘
                           │        ┌ Block 1206
                           ▼
┌──────────────────────────────────────────────────────────┐
│  Iteratively predict an attribute of the subsurface volume based on the  │
│  pre-computed stress, strain, and displacement values,  │
└──────────────────────────────────────────────────────────┘
                           │
                           ▼
                    ┌─────────────┐
                    │     END     │
                    └─────────────┘
```

FIG. 6

FIG. 7

1300

RECEIVE FAULTS GEOMETRY OF A SUBSURFACE
EARTH VOLUME
1302

RECEIVE AT LEAST ONE DATA SET
1304

Simulate linearly independent stress models for a
subsurface volume having multiple faults
1306

Compute stress, strain, or displacement
parameters for the subsurface volume based on
each of the linearly independent stress models
and contribution from each fault 1308

RECEIVE QUERY OR
UPDATED PARAMETER
REGARDING THE
SUBSURFACE EARTH
VOLUME
1320

1310

REAL
TIME
RESULTS
SECTION

Select Optimization Parameters and Fault Activity Boolean Variable
Values 1312

Determine in constant time the resulting strain, stress and
displacement using the selected optimization parameter/variable
values for comparing with observed data to generate the difference
as cost function 1314

IS THE COST
SATISFACTORILY LOW?
1316

NO

YES

APPLY THE SCALED STRAIN, STRESS,
AND/OR DISPLACEMENT VALUES TO THE SUBSURFACE
EARTH VOLUME FOR THE QUERY OR UPDATED PARAMETER
1318

$\beta = 1$ for all faults (all active)

Subsurface Earth Volume 801

802 Faults

803 Cross Section

804 Top View A

Observed Joint A 805-1

Observed Joint B 805-2

805-3 Observed Joint C

805-4 Observed Joint D

Computed Joints Orientation A 806

FIG. 8

EP 2 975 437 B1

FIG. 9

FIG. 10

900
Computing
System

908
Output Device(s)

912
Network

904
Memory

902
Computer
Processor(s)

906
Storage
Device(s)

910
Input Device(s)

*FIG. 11*

## REFERENCES CITED IN THE DESCRIPTION

**Patent documents cited in the description**

- US 2012072188 A

**Non-patent literature cited in the description**

- **F. MAERTEN ; P. G. RESOR ; D. D. POLLARD ; L. MAERTEN.** Inverting for slip on three-dimensional fault surfaces using angular dislocations. *Bulletin of the Seismological Society of America,* 2005, vol. 95, 1654-1665
- Poly3D: a three-dimensional, polygonal element, displacement discontinuity boundary element computer program with applications to fractures, faults, and cavities in the earth's crust. **A. L. THOMAS.** Master's thesis. Stanford University, 1995
- **F. MAERTEN ; L. MAERTEN ; M. COOKE.** Solving 3d boundary element problems using constrained iterative approach. *Computational Geosciences,* 2009
- **ANDERSON, E.** *The dynamics of faulting. Edinburgh Geol. Soc.,* 1905, vol. 8 (3), 387-402